# EUROPÄISCHE PATENTANMELDUNG

(11) **EP 2 947 612 A1**
(43) Veröffentlichungstag der Anmeldung: **25.11.2015**
(21) Anmeldenummer: 15001560.0
(22) Anmeldetag: 22.05.2015
(51) Int. Cl.: G06Q 10/08, G06Q 50/28

(54) **System zur Sicherung von Packeten**

(30) Priorität: 23.05.2014 DE 102014007507; 14.08.2014 DE 102014011950; 15.08.2014 DE 102014012030
(71) Anmelder: servicesite GmbH, 45133 Essen (DE)
(72) Erfinder: Waubert de Puiseau, Roland, 45133 Essen (DE)
(74) Vertreter: Weyers, Christopher

(57) **Zusammenfassung**

System zur Sicherung von Packstücken gegen unberechtigten Zugriff, vorzugsweise zum Empfang und/oder Versand der Packstücke, mit mehreren Sicherungseinrichtungen zur Sicherung eines Packstücks und mit einer Zentraleinrichtung, die dazu ausgebildet ist, ein Reservierungssignal zu empfangen und auf Basis des Reservierungssignals eine der Sicherungseinrichtungen auszuwählen, im Folgenden ausgewählte Sicherungseinrichtung genannt, und ein Buchungssignal und/oder ein Reservierungsbestätigungssignal zu erzeugen und auszugeben, wobei die ausgewählte Sicherungseinrichtung durch Verifikation mit dem Buchungssignal und/oder dem Reservierungsbestätigungssignal derart steuerbar ist, dass das Packstück mit der ausgewählten Sicherungseinrichtung sicherbar oder entsicherbar ist.

## Beschreibung

Die vorliegende Erfindung betrifft ein System, ein Verfahren, eine Zentraleinrichtung sowie eine Verwendung zur Sicherung von Gegenständen, insbesondere Packstücken, gegen unberechtigten Zugriff, vorzugsweise zum Empfangen und/oder Versand der Packstücke.

Die vorliegende Erfindung betrifft insbesondere den Empfang und/oder Versand von Packstücken wie Paketen, Päckchen, Lebensmittellieferungen oder sonstiger Gegenstände. Die vorliegende Erfindung kann jedoch auch allgemein zur Sicherung von Packstücken oder sonstiger Gegenstände gegen unberechtigten Zugriff bzw. Entfernen eingesetzt werden.

Der Begriff "Packstück" im Sinne der vorliegenden Erfindung ist daher vorzugsweise breit zu verstehen und erfasst insbesondere allgemein portabel oder separat verkehrsfähige Gegenstände. Zum besseren Verständnis wird die vorliegende Erfindung im Folgenden jedoch stets anhand des besonders bevorzugten Beispiels eines Versands bzw. Empfangs von Packstücken erläutert.

Die vorliegende Erfindung kann grundsätzlich auch auf anderen Gebieten als auf dem Gebiet des Versands bzw. Empfangs von Packstücken eingesetzt werden, beispielsweise im Zusammenhang mit Briefkästen, Postfächern oder Abholfächem für Waren oder sonstige Gegenstände oder auch Schließfachsystemen oder sonstigen Einrichtungen, die nicht zwingend zum Empfang und/oder Versand von Packstücken vorgesehen sein müssen.

Beim Versand, insbesondere der Zustellung, von Packstücken kann es passieren, dass der Empfänger bzw. Adressat des Packstücks das Packstück, beispielsweise aufgrund von Abwesenheit, nicht empfangen bzw. annehmen kann. Dies führt dazu, dass der Empfänger das Packstück an einem anderen Ort als den ursprünglichen Bestimmungsort abholen muss. In einem solchen Fall erfolgt die tatsächliche Zustellung des Packstücks folglich verspätet und/oder unter einem zusätzlichen Aufwand für die Empfänger. Darüber hinaus entstehen bei einem gescheiterten Zustellversuch seitens des Lieferdienstleisters zusätzliche Kosten.

Grundsätzlich sind Sicherungseinrichtungen, wie Postempfangsbehälter, zur Annahme, Sicherung und/oder Bereitstellung von Packstücken bekannt. Bei derartigen Sicherungseinrichtungen handelt es sich insbesondere um schließfachartige Konstruktionen, in denen Packstücke hinterlegt und zu einem späteren Zeitpunkt abgeholt werden können. Solche Postempfangsbehälter weisen eine verriegelte Tür oder Klappe auf, die nach Einlesen eines Abholscheins öffnet, wodurch das hinterlegte Packstück angenommen bzw. empfangen werden kann.

Derzeit übliche Vorrichtungen mit einer Vielzahl von Sicherungseinrichtungen bzw. Postempfangsbehältern bzw. Klappen sind anders als Briefkästen nicht bestimmten Wohneinheiten zugeordnet, sondern werden zentral vorgehalten. Sie haben den Nachteil, dass sich ein Empfänger zur Abholung zunächst für eine solche Vorrichtung registrieren muss und ferner eine Sendung nicht an seinem Wohnort in Empfang nehmen kann. Es ist auch nötig, die Adresse der Vorrichtung statt der Wohnadresse anzugeben. Der Nutzer muss also bereits vorab wissen, wo ein Packstück zugestellt werden soll. Hierbei ist zu berücksichtigen, dass die Entfernung zu einem nächstgelegenen System mehrere hundert Meter betragen kann, was insbesondere bei Empfang schwerer oder sperriger Sendungen aufgrund des Transportaufwands nachteilig ist.

In einer Alternative sind einzelne Sicherungseinrichtungen bzw. Postempfangsbehälter Wohnadressen zugeordnet, insbesondere also jeweils an einem oder vor einem Haus angeordnet. Grundsätzlich kann mit solchen personen- bzw. wohnortbezogenen Systemen vermieden werden, dass sich ein Empfänger einer Sendung über weitere Strecken hinweg zu einer Sicherungseinrichtung bzw. einem Postempfangsbehälter bewegen muss. Grundsätzlich betrifft die vorliegende Erfindung solche dezentrale Lösungen mit baulich getrennten und Wohneinheiten wie Wohnungen oder Häusern zugeordneten Sicherungseinrichtungen bzw. Postempfangsbehältern. Solche Lösungen sind nur mit einem oder wenigen Postempfangsbehältern ausgestattet, weshalb bei Belegung eines solchen Postempfangsbehälters trotzdem regelmäßig Ersatzzustellungen oder Abholungen in einer Filiale nötig sind. Zudem sind bisher bekannte dezentrale Systeme stets anbieterspezifisch, um Zugriff auf Packstücke durch fremde Firmen zu vermeiden.

Die DE 10 2006 047 797 A1 betrifft eine Schließfachanlage, bei der in einem RFID-Transponder die ungefähren Abmessungen der Sendung hinterlegt sind. Belegzustände werden von einer Datenverarbeitungseinheit dazu genutzt, freie Fächer mit einer Größe zu bestimmen, in welche die einzustellenden Paketsendungen aufgrund ihrer Abmessungen hineinpassen. Fach-Identifikationen der freien Fächer, in welche Paketsendungen einstellbar sind, werden von der Datenverarbeitungseinheit an eine Steuereinheit übermittelt. Zusammen mit den Identifikationen wird ein Befehl zum öffnen von Fächern an die Steuereinheit übermittelt. Die Steuereinheit ist so ausgebildet, dass sie durch Steuersignale die Verschlussmittel der Fächer ansteuert und so ein öffnen und Verschliessen von Schlössern aktiviert. Es lässt sich jedoch nicht vorab ermitteln, ob ein geeignetes Schließfach zur Verfügung steht, weshalb der Nutzer dieses Systems ggf. mehrere Schließfachanlagen testen muss oder nach vergeblichem Versuch die Paketsendung in eine Sammelstelle bringen muss, was erheblichen Mehraufwand bedeutet.

Aufgabe der vorliegenden Erfindung ist es daher, ein System, ein Verfahren und eine Einrichtung zur Sicherung von Packstücken gegen unberechtigten Zugriff, vorzugsweise zum Empfang und/oder Versand der Packstücke anzugeben, wodurch eine wohnortnahe Zustellung ermöglicht wird, eine Ersatzzustellung, Neuzustellung oder Filialzustellung vermieden wird und/oder die Auslastung bzw. Effizienz von Wohneinheit bezogenen Systemen zum Empfang und/oder Versand der Packstücke verbessert werden kann.

Diese Aufgabe wird durch ein System gemäß Anspruch 1, durch ein Verfahren gemäß Anspruch 11 oder eine Zentraleinrichtung gemäß Anspruch 12 oder eine Verwendung gemäß Anspruch 13 gelöst. Vorteilhafte Weiterbildungen sind Gegenstand der Unteransprüche.

Ein erster Aspekt der vorliegenden Erfindung betrifft ein System zur Sicherung von Packstücken gegen unberechtigten Zugriff, vorzugsweise zum Empfang und/oder Versand der Packstücke.

Hierbei wird ein Buchungssignal und/oder ein Reservierungsbestätigungssignal von einer Zentraleinrichtung auf Anforderung mittels eines Reservierungssignals erzeugt, wobei eine ausgewählte Sicherungseinrichtung durch Verifikation mit dem Buchungssignal und/oder dem Reservierungsbestätigungssignal derart steuerbar ist, dass der Gegenstand bzw. das Packstück mit der ausgewählten Sicherungseinrichtung sicherbar oder entsicherbar ist.

In Vorteilhafter Weise ermöglicht die Verifikation mit dem Buchungssignal und/oder ein Reservierungsbestätigungssignal eine vorherige Reservierung einer geeigneten Sicherungseinrichtung und die spätere Nutzung bzw. Belegung dieser, wodurch Zeitverlust vermieden und Ressourcen geschont werden können.

Es ist also bevorzugt, dass ein von einer Zentraleinrichtung an die ausgewählte Sicherungseinrichtung übermitteltes Buchungssignal für einen Verifikationsprozess verwendet wird, mit dem die Sicherungseinrichtung gesteuert, insbesondere geöffnet, wird. Alternativ oder zusätzlich wird ein Reservierungsbestätigungssignal ausgegeben, von der ausgewählten Sicherungseinrichtung eingelesen und für den Verifikationsprozess verwendet, mit dem die Sicherungseinrichtung gesteuert, insbesondere geöffnet, wird.

Packstücke im Sinne der vorliegenden Erfindung sind vorzugsweise Pakete, Postsendungen, Päckchen, (Groß-) Briefe, Lebensmittellieferungen oder sonstige Gegenstände, die von Postdienstleistern, Paketdiensten, Logistikunternehmen und/oder einer autorisierten Person transportiert, abgeholt und/oder ausgeliefert werden. Im Übrigen wird auf die in der Einleitung erwähnte Definition verwiesen.

Das System weist mehrere Sicherungseinrichtungen zur Sicherung jeweils eines Packstücks auf. In vorteilhafter Weise ermöglicht die Zusammenfassung mehrerer Sicherungseinrichtungen in dem System eine zentralisierte Verwaltung und Steuerung der Sicherungseinrichtungen, was eine wesentlich effizienteren Nutzung beispielsweise auch von benachbarten Sicherungseinrichtungen ermöglicht.

Eine Sicherungseinrichtung im Sinne der vorliegenden Erfindung ist vorzugsweise eine Einrichtung, die insbesondere dazu ausgebildet ist, ein Packstück gegen Entfernen und/oder unberechtigte Entnahme, Diebstahl, Beschädigung und/oder Vandalismus zu schützen bzw. sichern. Vorzugsweise handelt es sich bei der Sicherungseinrichtung um eine Postempfangseinrichtung bzw. einen Postempfangsbehälter, wie einen Briefkasten, Paketkasten oder eine sonstige Einrichtung mit einem Sicherungsmechanismus zum Sichern eines Packstücks, wie eine Klappe, ein Schloss, ein Riegel, eine Falle, eine Tür oder dergleichen.

Eine Sicherungseinrichtung im Sinne der vorliegenden Erfindung ist besonders bevorzugt ein insbesondere kisten-, kasten- oder fachartiger Behälter.

Vorzugsweise weist die Sicherungseinrichtung eine Öffnung zum Einlegen und/oder zum Entnehmen des Packstücks auf.

Die Öffnung zum Einlegen und/oder zum Entnehmen des Packstücks hat vorzugsweise eine lichte Weite, die größer als 50 cm, vorzugsweise größer als 60 cm, insbesondere größer als 70 cm, und/oder geringer als 150 cm, vorzugsweise geringer als 100 cm, insbesondere geringer als 80 cm, ist.

Die Öffnung ist vorzugsweise zur Sicherung des Packstücks verschließbar ausgebildet. Besonders bevorzugt ist die Öffnung der Sicherungseinrichtung mittels einer Verschlusseinrichtung, wie einer Tür oder Klappe, verschließbar, die automatisch und/oder elektronisch zur Sicherung oder Entsicherung steuerbar, insbesondere verriegelbar bzw. entriegelbar ist.

Das Packstück ist vorzugsweise mit der Sicherungseinrichtung dadurch sicherbar oder entsicherbar, dass die Öffnung freigegeben wird, die Verschlusseinrichtung entsichert wird oder ein Zugriff auf das Packstück oder einen Sicherungsbereich zur Sicherung des Packstücks auf sonstige Weise freigegeben wird.

Vorzugsweise wird ein Versandstück bzw. Packstück mittels der Sicherungseinrichtung durch Einlegen, Einwerfen und/oder Einschieben in die Sicherungseinrichtung und/oder Verschließen bzw. Verriegeln der Sicherungseinrichtung gesichert. Besonders bevorzugt ist ein mittels der Sicherungseinrichtung gesichertes Versandstück bzw. Packstück unzugänglich und/oder relativ zur Sicherungseinrichtung unbewegbar.

Vorzugsweise wird ein Versandstück mittels der Sicherungseinrichtung durch Entriegeln bzw. Aufschließen der Sicherungseinrichtung entsichert. Besonders bevorzugt ist ein entsichertes Versandstück aus der Sicherungseinrichtung herausnehmbar bzw. von der Sicherungseinrichtung entfernbar.

Insbesondere weist die Sicherungseinrichtung ein Fach auf, wobei das Packstück durch Öffnung des Fachs, Einlegen des Packstücks und nachfolgendes Verschließen des Fachs sicherbar oder entsicherbar ist. Hier sind jedoch grundsätzlich auch andere Lösungen möglich.

In einer besonders bevorzugten Ausführungsform weist die Sicherungseinrichtung eine Tür oder Klappe auf, die in Öffnungsrichtung derart federbelastet ist, dass die Tür oder Klappe bei einer (automatischen) Entriegelung selbsttätig öffnet. Nach Einlegen oder Entnehmen des Packstücks kann die Tür oder Klappe dann gegen die Federspannung verschlossen werden, wobei vorzugsweise eine (automatische) Verriegelung erfolgt.

Die Sicherungseinrichtung kann ein Volumen durch Wände begrenzen oder auf sonstige Weise unzugänglich machen, vorzugsweise derart, dass das Packstück zur Sicherung in dem Volumen platziert und zur Entsicherung aus dem Volumen wieder entfernt werden kann.

Die Sicherungseinrichtung weist vorzugsweise ein Volumen auf, das mehr als 15 l, vorzugsweise mehr als 20 l, insbesondere mehr als 25 l und/oder weniger als 150 l, vorzugsweise weniger als 120 l, insbesondere weniger als 100 l beträgt.

Das System weist ferner eine Zentraleinrichtung auf. Die Zentraleinrichtung ist vorzugsweise ein Rechner, ein Computer, ein Server oder weist eine Recheneinrichtung, einen Computer oder einen Server auf. Hier sind jedoch auch andere Lösungen möglich. Beispielsweise kann die Zentraleinrichtung auch eine virtuelle Einheit von Computern sein und/oder durch so genanntes Cloud-Computing realisiert sein. Vorzugsweise ist die Zentraleinrichtung räumlich getrennt und/oder beabstandet zur Sicherungseinrichtung angeordnet. Insbesondere sind die Zentraleinrichtung und die Sicherungseinrichtung an unterschiedlichen Standorten angeordnet.

Die Zentraleinrichtung ist dazu ausgebildet, ein Reservierungssignal zu empfangen. Die Zentraleinrichtung weist hierzu vorzugsweise eine Benutzerschnittstelle auf. Alternativ oder zusätzlich verfügt die Zentraleinrichtung über mindestens einen Receiver bzw. Transceiver zum empfangen des Reservierungssignals. Der Receiver bzw. Transceiver kann Teil der Benutzerschnittstelle sein oder umgekehrt. Hier sind jedoch auch andere Lösungen möglich.

Ein Signal im Sinne der vorliegenden Erfindung ist vorzugsweise ein Mittel zur Informationsübertragung, eine (modulierte) Welle, insbesondere in einem Leiter, eine Bitsequenz, ein Paket im informationstechnischen Sinne oder dergleichen. Ein Signal im Sinne der vorliegenden Erfindung ist vorzugsweise über ein Übertragungsmedium bzw. mittels einer Datenverbindung übertragbar. Vorzugsweise sind einem Signal Informationen zugeordnet oder in dem Signal enthalten, die mittels des Signals übermittelbar sind.

Das Reservierungssignal ist vorzugsweise ein Signal, das Informationen für eine Reservierung oder Buchung einer Sicherungseinrichtung und/oder über ein zu sicherndes bzw. zu entsicherndes Packstück aufweist.

Die Zentraleinrichtung ist dazu ausgebildet, auf Basis des Reservierungssignals eine der Sicherungseinrichtungen auszuwählen, im Folgenden ausgewählte Sicherungseinrichtung genannt.

Die ausgewählte Sicherungseinrichtung kann dem Reservierungssignal oder einem Teil hiervon zugeordnet sein oder werden, vorzugsweise durch die Zentraleinrichtung. Daher wird die ausgewählte Sicherungseinrichtung alternativ oder zusätzlich auch zugeordnete Sicherungseinrichtung genannt. Die Begriffe "ausgewählte Sicherungseinrichtung" und "zugeordnete Sicherungseinrichtung" können Synonym verwendet werden bzw. sind vorzugsweise austauschbar.

Vorzugsweise wird das Reservierungssignal von der Zentraleinrichtung empfangen und weiterverarbeitet. Das Reservierungssignal kann durch die Zentraleinrichtung analysiert werden. Als Ergebnis oder durch das Ergebnis dieser Analyse kann dann die Sicherungseinrichtung ausgewählt werden.

Die Zentraleinrichtung ist vorzugsweise ferner dazu ausgebildet bzw. eingerichtet, ein Buchungssignal und/oder ein Reservierungsbestätigungssignal zu erzeugen und auszugeben.

Ein Buchungssignal im Sinne der vorliegenden Erfindung ist vorzugsweise ein Signal, das Informationen zur Steuerung und/oder für den Betrieb und/oder für eine Verifikation mittels einer oder mehrerer Sicherungseinrichtungen aufweist.

Die Zentraleinrichtung ist vorzugsweise dazu ausgebildet, die ausgewählte Sicherungseinrichtung mit dem Buchungssignal und/oder dem Reservierungsbestätigungssignal so zu steuern, dass das Packstück mit der ausgewählten Sicherungseinrichtung sicherbar oder entsicherbar ist.

Es ist bevorzugt, dass ein von der Zentraleinrichtung an die ausgewählte Sicherungseinrichtung übermitteltes Buchungssignal für einen Verifikationsprozess verwendet wird, mit dem die Sicherungseinrichtung gesteuert, insbesondere geöffnet, wird.

Alternativ oder zusätzlich wird das Reservierungsbestätigungssignal ausgegeben, von der ausgewählten Sicherungseinrichtung eingelesen und für einen Verifikationsprozess verwendet, mit dem die Sicherungseinrichtung gesteuert, insbesondere geöffnet, wird.

Besonders bevorzugt erfolgt die Verifikation mittels des an die ausgewählte Sicherungseinrichtung übermittelten Buchungssignals und des durch die Sicherungseinrichtung eingelesenen Reservierungssignals, wodurch die ausgewählte Sicherungseinrichtung steuerbar bzw. das Packstück mit der ausgewählten Sicherungseinrichtung sicherbar oder entsicherbar ist.

Mit dem vorschlagsgemäßen System kann die Funktion der jeweiligen Sicherungseinrichtung in vorteilhafter Weise dynamisch angepasst werden. Insbesondere ist es mit dem vorschlagsgemäßen System möglich, zu unterschiedlichen Zeitpunkten unterschiedlichen Nutzern, insbesondere Paketdiensten, Empfängern und/oder Absendern, eine Sicherung von Packstücken mit derselben Sicherungseinrichtung zu ermöglichen.

Ferner ermöglicht die vorschlagsgemäße Erfindung die Ermittlung und Reservierung geeigneter Sicherungseinrichtungen/Postempfangsbehälter im Vorfeld einer Zustellung. Folglich werden Neuzustellungen oder Ersatzzustellungen vermieden. Hierdurch kann der Versand bzw. Empfang von Packstücken wesentlich effizienter, kostengünstiger, ressourcensparender, zeitsparender und vorausschaubarer erreicht werden. Insbesondere wird der durchschnittliche Energieverbrauch für eine Zustellung durch die Vermeidung von Ersatzzustellungen oder Neuzustellungen verringert, beispielsweise durch einen geringeren Treibstoffverbrauch der Zustellfahrzeuge.

Das vorschlagsgemäße System bietet auch Vorteile durch eine effiziente wohnortnahe Zustellung oder Abholung von Packstücken. Mit dem vorschlagsgemäßen System können Sicherungseinrichtungen unmittelbar Wohneinheiten wie Wohnungen, Häusern oder Haushalten zugeordnet oder an diesen angebracht werden, wodurch der Aufwand für die Entgegennahme bzw. Abholung oder Abgabe bzw. Aufgabe des Packstücks reduziert wird. Das vorschlagsgemäße System bietet hierbei die Möglichkeit, bei einer im Einzelfall zu geringen Anzahl oder ungeeigneten Größe von Sicherungseinrichtungen ein möglichst nahe gelegenes alternatives Sicherungssystem zu ermitteln und/oder zu nutzen, beispielsweise einen Postempfangsbehälter des Nachbarn. Vorzugsweise kann hierzu ein Sicherungssystem für eine Nutzung durch eine bestimmte Gruppe Dritter, beispielsweise unmittelbare Nachbarn oder Nachbarn in einem bestimmten Umkreis, freigegeben oder gesperrt werden. Hierdurch erübrigt sich eine aufwändige Abholung bei einer Filiale oder einem zentralen Postempfangsbehältersystem in größerer Entfernung.

Im Ergebnis wird mit dem vorschlagsgemäßen System die Verfügbarkeit von Sicherungseinrichtungen insbesondere wohnortnahen oder unmittelbar Wohneinheiten zugeordneten Sicherungssystemen, maßgeblich verbessert, selbst wenn pro Haushalt, Wohneinheit, Wohnung, Haus oder dergleichen nur ein oder eine geringe Anzahl Sicherungssysteme vorgesehen sind.

Vorzugsweise weisen die Sicherungseinrichtungen jeweils einen Transceiver zum Empfang des Buchungssignals von der Zentraleinrichtung auf. Die Zentraleinrichtung ist bevorzugt dazu ausgebildet, das Buchungssignal über eine Datenverbindung an die ausgewählte Sicherungseinrichtung zu übermitteln und die ausgewählte Sicherungseinrichtung mit dem übermittelten Buchungssignal zu steuern. Durch die Übermittlung des Buchungssignals kann insbesondere die Berechtigung, ein Packstück mit der ausgewählten Sicherungseinrichtung zu sichern bzw. zu entsichern, dynamisch angepasst werden, wodurch dieselbe (ausgewählte) Sicherungseinrichtung durch unterschiedliche Personenkreise genutzt werden kann.

Das System weist vorzugsweise eine oder mehrere Reservierungseinrichtung/-en zur Erzeugung und/oder Übermittlung des Reservierungssignals an die Zentraleinrichtung auf. Die Reservierungseinrichtung kann einem Paketdienst, Handelsunternehmen oder Logistikuntemehmen zugeordnet sein. Insbesondere kann die Reservierungseinrichtung eine Schnittstelle zu einem Logistiksystem aufweisen. Es ist bevorzugt, dass die Reservierungseinrichtung das Reservierungssignal mit oder aus Informationen eines zu sichernden bzw. zu sichernden Packstücks erzeugt, bevorzugt in Form eines oder mehrerer Parameter oder eines Parametersatzes. Zu den Informationen eines zu sichernden Packstücks zählen insbesondere ein Zielort, physikalische Eigenschaften des Packstücks und/oder ein bevorzugter Zeitraum der Sicherung/Zustellung und/oder der Entsicherung/Abholung.

Vorzugsweise weist das System mindestens zwei, vorzugsweise mehr als zwei oder mehr als drei, insbesondere mehr als fünf oder zehn Reservierungseinrichtungen auf. Dies ermöglicht die Nutzung durch unterschiedliche Personen oder Institutionen. Das System und/oder die Zentraleinrichtung ist vorzugsweise dazu ausgebildet, die Reservierungseinrichtungen untereinander zu synchronisieren.

Vorzugsweise umfassen die physikalischen Eigenschaften eine Abmessung, ein Gewicht, eine Verderblichkeit, Haltbarkeit, Kühlpflichtigkeit, Isolationseigenschaft und/oder eine Haltbarkeit, Stabilität und/oder Verderblichkeit in Abhängigkeit von einer Temperatur und/oder Lagerzeit, insbesondere des Packstücks oder einer oder mehrerer dem Packstück zugeordneter oder von dem Packstück umfasster Gegenstände.

Die Reservierungseinrichtung ist und/oder die Reservierungseinrichtungen sind jeweils vorzugsweise Paketdiensten, Handelsunternehmen oder Logistikunternehmen zugeordnet. Die Zentraleinrichtung ist vorzugsweise dazu ausgebildet, von den Reservierungseinrichtungen empfangene Reservierungssingale nach dem first-in first-out Prinzip, sequenziell und/oder nach Prioritäten zu verarbeiten, um Sicherungseinrichtungen auszuwählen, insbesondere derart, dass eine Doppelbuchung bzw. eine Auswahl derselben Sicherungseinrichtung für unterschiedliche Packstücke verhindert wird.

Vorzugsweise weist das Reservierungssignal einen Ortsanfrageindikator zur Identifikation eines Zielorts zur Sicherung des Packstücks auf. Die Zentraleinrichtung dazu ausgebildet, Abstände jeweils zwischen dem Zielort und dem jeweiligen Standort der Sicherungseinrichtungen zu bestimmen und die Sicherungseinrichtung auf Basis eines Vergleichs der Abstände auszuwählen. Der Ortsanfrageindikator ermöglicht es in vorteilhafter Weise, mit der Zentraleinrichtung diejenigen Sicherungseinrichtungen zu ermitteln, auszuwählen und/oder zu priorisieren, die einen möglichst geringen Abstand von dem Zielort aufweisen.

Alternativ oder zusätzlich weist das Reservierungssignal einen Packstückparameter auf, der zu physikalischen Eigenschaften des zu sichernden Packstücks korrespondiert. Die Zentraleinrichtung ist vorzugsweise dazu ausgebildet, die Sicherungseinrichtungen auf Eignung zur Sicherung eines Packstücks mit den physikalischen Eigenschaften zu überprüfen und in Abhängigkeit von der Eignung die Sicherungseinrichtung auszuwählen. In vorteilhafter Weise wird hierdurch eine Auswahl einer für das konkrete Packstück ungeeigneten Sicherungseinrichtung vermieden.

Alternativ oder zusätzlich weist das Reservierungssignal einen Zeitanfrageindikator zur Identifikation einer Zeit, eines Datums, und/oder eines Zeitraums, vorzugsweise zu dem/der der Packstück mit einer der Sicherungseinrichtungen gesichert werden soll, auf. Vorzugsweise ist die Zentraleinrichtung dazu ausgebildet, die durch den Zeitanfrageindikator identifizierte Zeit, das durch den Zeitanfrageindikator identifizierte Datum, und/oder den durch den Zeitanfrageindikator identifizierten Zeitraum mit einer Verfügbarkeit der Sicherungseinrichtungen zu vergleichen und die Sicherungseinrichtung in Abhängig von dem Ergebnis des Vergleichs auszuwählen. Hierdurch kann eine optimale Auslastung der jeweiligen Sicherungseinrichtung erreicht und eine Kollision bei der Nutzung der jeweiligen Sicherungseinrichtung vermieden werden.

Vorzugsweise ist die Zentraleinrichtung dazu ausgebildet, das Buchungssignal zur Steuerung der ausgewählten Sicherungseinrichtung zu erzeugen und/oder an die ausgewählte Sicherungseinrichtung zu übermitteln.

Das Buchungssignal weist vorzugsweise ein Sicherungsverifikationsmittel zur Verifikation eines zur Sicherung des Packstücks berechtigten Nutzers auf, wobei die jeweilige Sicherungseinrichtung dazu ausgebildet ist, eine Sicherung des Packstücks nur nach Verifikation mit dem Sicherungsverifikationsmittel zu ermöglichen. In vorteilhafter Weise kann hierdurch erreicht werden, dass nur geeignete Packstücke bei entsprechender Berechtigung bzw. vorheriger Reservierung über die Zentraleinrichtung mit der ausgewählten Sicherungseinrichtung sicherbar sind. Folglich werden Doppelüberlegungen, Überschneidungen oder sonstige Kollisionen wirksam verhindert.

Alternativ oder zusätzlich weist das Buchungssignal ein Entsicherungsverifikationsmittel zur Verifikation eines zur Entsicherung des Packstücks berechtigten Nutzers auf, wobei die jeweilige Sicherungseinrichtung dazu ausgebildet ist, eine Entsicherung des Packstücks nur nach Verifikation mit dem Entsicherungsverifikationsmittel zu ermöglichen. Hierdurch kann in vorteilhafter Weise sichergestellt werden, dass eine Entsicherung nur mit der entsprechenden Berechtigung und/oder nach Sicherung ermöglicht wird, insbesondere also ein Packstück nicht durch einen unberechtigten Dritten entspricht und entwendet wird.

Alternativ oder zusätzlich weist das Buchungssignal einen Zeitreservierungsindikator zur Identifikation eines Zeitraums auf, in dem der Packstück mit dem Sicherungssystem gesichert werden soll, wobei die jeweilige Sicherungseinrichtung dazu ausgebildet ist, eine Sicherung und/oder Entsicherung des Packstücks nur in dem durch den Zeitreservierungsindikator identifizierten Zeitraum zu ermöglichen. Dies ermöglicht eine zeitlich aufeinanderfolgende Nutzung der jeweiligen Sicherungseinrichtung für unterschiedliche Packstücke und/oder unterschiedliche Abholer bzw. Versender unter Vermeidung von Doppelbelegungen.

Die Zentraleinrichtung ist vorzugsweise dazu ausgebildet, ein Reservierungsbestätigungssignal zu erzeugen und/oder auszugeben. Das Reservierungsbestätigungssignal ist vorzugsweise ein Signal, das Informationen bezüglich der ausgewählten Sicherungseinrichtung und/oder bezüglich deren Sicherung und/oder Entsicherung aufweist. Das Reservierungsbestätigungssignal weist insbesondere Informationen bezüglich des Standorts der ausgewählten Sicherungseinrichtung und eines Zeitraums deren Reservierung auf.

Die Zentraleinrichtung ist bevorzugt dazu ausgebildet, das Reservierungsbestätigungssignal an die Reservierungseinrichtung oder an eine der Reservierungseinrichtung zugeordnete Empfangseinrichtung zu übermitteln. Die Reservierungseinrichtung kann also das Reservierungssignal an die Zentraleinrichtung übermitteln und nach Auswahl der Sicherungseinrichtung als Antwort von der Zentraleinrichtung das Reservierungsbestätigungssignal mit Informationen zu der ausgewählten Sicherungseinrichtung erhalten.

Vorzugsweise weist das Reservierungsbestätigungssignal einen Zeitbestätigungsindikator zur Identifikation eines Datums, einer Zeit und/oder eines Zeitraums, zu oder über den dem Packstück mit dem zugeordneten Sicherungssystem gesichert werden soll, auf. Der Zeitbestätigungsindikator kann mit dem Zeitreservierungsindikator übereinstimmen oder hierzu korrespondieren. Insbesondere weist die Zentraleinrichtung einem Reservierungssignal die ausgewählte Sicherungseinrichtung über einen bestimmten Zeitraum zu, der vorzugsweise an dem durch den Zeitreservierungsindikator identifizierten Zeitraum orientiert ist, insbesondere in dem durch den Zeitreservierungsindikator identifizierten Zeitraum beginnt oder diesen umfasst. Hierdurch kann in vorteilhafter Weise eine zeitnahe Sicherung bzw. Entsicherung des Packstücks mit der zugeordneten Sicherungseinrichtung bzw. eine zeitnahe Abholung oder Zustellung erreicht werden.

Alternativ oder zusätzlich weist das Reservierungsbestätigungssignal einen Ortsbestätigungsindikator zur Identifikation eines Standorts der ausgewählten Sicherungseinrichtung zur Sicherung des Packstücks auf. Vorzugsweise wird ein Abstand von dem Zielort zu der jeweiligen Sicherungseinrichtung bestimmt, wodurch eine Sicherungseinrichtung mit möglichst geringem Abstand zum Zielort auswählbar ist. Dies führt dazu, dass der Standort der zugeordneten bzw. ausgewählten Sicherungseinrichtung vom Zielort abweichen kann. Daher ist es bevorzugt, dass das Reservierungsbestätigungssignal den Standort der ausgewählten Sicherungseinrichtung oder einen hierzu korrespondierenden Identifikator ausweist.

Alternativ oder zusätzlich weist das Reservierungsbestätigungssignal einen Sicherungsidentifikator zur Identifikation eines zur Sicherung des Packstücks berechtigten Nutzers auf, wobei die ausgewählte Sicherungseinrichtung dazu ausgebildet ist, eine Sicherung des Packstücks nur nach Verifikation mit dem Sicherungsidentifikator zu ermöglichen.

Alternativ oder zusätzlich weist das Reservierungsbestätigungssignal einen Entsicherungsidentifikator zur Identifikation eines zur Entsicherung des Packstücks berechtigten Nutzers auf, wobei die ausgewählte Sicherungseinrichtung dazu ausgebildet ist, eine Entsicherung des Packstücks nur nach Verifikation mit dem Sicherungsverifikationsmittel zu ermöglichen.

Der Sicherungsidentifikator bzw. Entsicherungsidentifikator und/oder das Sicherungsverifikationsmittel bzw. Entsicherungsverifikationsmittel ist vorzugsweise eine einmalige Kennung, Zufallsfolge, Bitfolge, ein Schlüssel oder ein sonstiges Verifikationsmittel, das vorzugsweise dazu ausgebildet ist, mit der Sicherungseinrichtung eine Verifikation zu ermöglichen. Die Verifikation mit dem Sicherungsidentifikator und/oder dem Sicherungsverifikationsmittel kann einen Sicherungsprozess bzw. mit dem Entsicherungsidentifikator und/oder dem Entsicherungsverifikationsmittel eine Entsicherung mit der ausgewählten Sicherungseinrichtung ermöglichen oder initiieren.

Eine Identifikationseinrichtung im Sinne der vorliegenden Erfindung, auch Empfangseinrichtung genannt, ist vorzugsweise dazu ausgebildet, den Sicherungsidentifikator und/oder den Entsicherungsidentifikator von der Zentraleinrichtung zu empfangen und/oder zwischenzuspeichern.

Alternativ oder zusätzlich ist die Identifikationseinrichtung im Sinne der vorliegenden Erfindung vorzugsweise dazu ausgebildet, den Sicherungsidentifikator und/oder den Entsicherungsidentifikator, bevorzugt drahtlos, zu senden, vorzugsweise an die Verifikationseinrichtung.

Die Identifikationseinrichtung und/oder die Buchungseinrichtung ist vorzugsweise ein mobiles, aktives oder passives Gerät. Die Identifikationseinrichtung und/oder die Buchungseinrichtung ist vorzugsweise oder weist vorzugsweise auf: ein oder mehrere Smartphones, Computer, NFC-Controller, Smartcards, Transponder, Terminals, Tablets, PCs, NFC-Einrichtungen, RFID-Einrichtungen, Displays, Infrarot-, Funk-, elektrische, magnetische und/oder elektromagnetische Transmitter, Receiver, Transceiver und/oder Transponder, Taschengeräte, mobile und/oder netzunabhänige oder drahtlose Geräte, o. dgl.

Die Identifkationseinrichtung ist vorzugsweise dazu ausgebildet, den Sicherungsidentifikator und/oder den Entsicherungsidentifikator, insbesondere ausschließlich, in der unmittelbaren Umgebung oder Sichtweite der Verifikationseinrichtung an diese zu übermitteln, um eine Sicherung bzw. Entsicherung mit bzw. eine Öffnung der ausgewählten Sicherungseinrichtung zu bewirken.

Das vorschlagsgemäße System weist vorzugsweise mehrere Identifikationseinrichtungen auf, vorzugweise eine erste Identifikationseinrichtung zum Sichern des Packstücks und/oder aufweisend den Sicherungsidtetifikator und eine unterschiedliche zweite Identifikationseinrichtung zum Entsichern des Packstücks und/oder aufweisend den Entsicherungsidentifikator.

Vorzugsweise ist der Sicherungsidentifikator und/oder das Entsicherungsidentifikator durch die Verifikationseinrichtung von der Identifikationseinrichtung abrufbar und/oder an die Verifikationseinrichtung übermittelbar, insbesondere wodurch die Sicherungseinrichtung geöffnet oder auf sonstige Weise das Packstück gesichert und/oder entsichert werden kann.

Der Sicherungsidentifikator bzw. Entsicherungsidentifikator und/oder das Sicherungsverifikationsmittel bzw. Entsicherungsverifikationsmittel wird vorzugsweise durch die Zentraleinrichtung erzeugt und/oder übermittelt. Der Sicherungsidentifikator bzw. Entsicherungsidentifikator und/oder das Sicherungsverifikationsmittel bzw. Entsicherungsverifikationsmittel wird/werden vorzugsweise unter Verwendung des Reservierungssignals erzeugt, korrespondiert/korrespondieren zu dem Reservierungssignal oder korrespondiert/korrespondieren zu einem Teil des Reservierungssignals. Hier sind jedoch auch andere Lösungen denkbar.

Beispielsweise kann der Sicherungsidentifikator bzw. Entsicherungsidentifikator ein der Zentraleinrichtung und/oder der Buchungseinrichtung oder einer der Buchungseinrichtung zugeordneten Einrichtung bereits bekannter, hinterlegter oder abgespeicherter Identifikator sein, der nicht zwingend von der Zentraleinrichtung an die ausgewählte Sicherungseinrichtung übermittelt werden muss. Hierbei ist es bevorzugt, dass eine Kennung des Packstücks oder eines Verwenders des vorschlagsgemäßen Systems, insbesondere eines Paketdienstmitarbeiters, als Sicherungsidentifikator bzw. Entsicherungsidentifikator verwendet wird.

Der Sicherungsidentifikator und das Sicherungsverifikationsmittel sind vorzugsweise unterschiedlich und/oder mit unterschiedlichen Medien an die ausgewählte Sicherungseinrichtung übertragbar. Entsprechendes gilt für den Entsicherungsidentifikator und das Entsicherungsverifikationsmittel.

In einer Variante ist es bevorzugt, dass eine Verifikation zur Sicherung und/oder Entsicherung mit der Sicherungseinrichtung unter Verwendung eines Bekannten oder vorbestimmten Sicherungsidentifikators bzw. Entsicherungsidentifikators erfolgt. Beispielsweise ist der Sicherungsidentifikator bzw. Entsicherungsidentifikator ein Identifikationsmittel wie eine Chipkarte, ein Transponder, ein Tag oder ein sonstiger durch die jeweilige Sicherungseinrichtung ein- bzw. auslesbarer Speicher, der den Sicherungsidentifikator bzw. Entsicherungsidentifikator aufweist. In dieser Variante ist es bevorzugt, dass die Zentraleinrichtung die ausgewählte Sicherungseinrichtung, insbesondere mit dem Buchungssignal, so steuert, dass eine Sicherung des Packstücks mit dem Sicherungsidentifikator bzw. eine Entsicherung des Packstücks mit dem Entsicherungsidentifikator ermöglicht wird. Hierzu ist bevorzugt, dass das Buchungssignal ein zu dem Sicherungsidentifikator korrespondierendes Sicherungsverifikationsmittel und/oder ein zu dem Entsicherungsidentifikator korrespondierendes Entsicherungsverifikationsmittel aufweist. Diese Variante bietet Vorteile hinsichtlich einer wenig aufwendigen und unkomplizierten Verifikation, da für eine oder mehrere Verifikationen der Sicherungsidentifikator bzw. Entsicherungsidentifikator nicht aktualisiert werden muss.

In einer weiteren Variante ist es bevorzugt, dass das Sicherungsverifikationsmittel und/oder Entsicherungsverifikationsmittel bereits vorbestimmt und/oder in der jeweiligen Sicherungseinrichtung und/oder in der Zentraleinrichtung abgespeichert oder hinterlegt ist/sind, insbesondere als Liste, als lediglich einmalig nutzbare Elemente o.dgl. Hierbei ist bevorzugt, dass mit dem Reservierungsbestätigungssignal ein zu dem Sicherungsverifikationsmittel korrespondierender Sicherungsidentifikator und/oder ein zu dem Entsicherungsverifikationsmittel korrespondierender Entsicherungsidentifikator erzeugt und/oder ausgegeben und/oder übermittelt wird/werden, vorzugsweise durch die Zentraleinrichtung.

Beispielsweise kann einer bestimmten Sicherungseinrichtung eine bestimmte Abfolge von Transaktionsnummern oder sonstigen Transaktionsidentifikatoren zugeordnet sein. Diese Transaktionsnummern bzw. Transaktionsidentifikatoren oder hierzu korrespondierende Sicherungsidentifikatoren bzw. Entsicherungsidentifikatoren sind vorzugsweise in der Zentraleinrichtung hinterlegt, abgespeichert und/oder in einer Datenbank oder in einer Tabelle hinterlegt. Vorzugsweise sind die Sicherungsidentifikatoren und/oder die Entsicherungsidentifikatoren den Transaktionsnummern bzw. Transaktionsidentifikatoren bzw. den Sicherungsverifikationsmitteln bzw. Entsicherungsverifikationsmitteln zugeordnet, insbesondere in einer Tabelle. Bei Empfang eines Reservierungssignals kann eine Sicherungseinrichtung ausgewählt werden, ein zu der ausgewählten Sicherungseinrichtung korrespondierende Sicherungsidentifikator bzw. Entsicherungsidentifikator bestimmt, ausgewählt oder ausgelesen werden und der korrespondierende Sicherungsidentifikator bzw. Entsicherungsidentifikator dann, vorzugsweise, mit dem oder als Reservierungsbestätigungssignal ausgegeben oder übermittelt werden, insbesondere durch die Zentraleinrichtung.

Diese Variante bietet Vorteile dadurch, das nicht zwingend eine Datenverbindung oder zumindest keine kontinuierliche Datenverbindung zwischen der jeweiligen Sicherungseinrichtung und der Zentraleinrichtung nötig ist. Folglich können auch datentechnisch nicht erschlossene Gebiete mit Sicherungseinrichtungen ausgestattet werden. Da zudem Energie eingespart werden kann, wenn die Datenverbindung nicht oder zumindest nicht kontinuierlich benötigt wird, hat diese Variante auch Vorteile in Bezug auf batteriebetriebene, akkubetriebene oder durch regenerative Energien, beispielsweise mittels Fotovoltaik oder unter Nutzung von Windenergie bzw. unter Nutzung von Energy-Harvesting-Technologien betriebene Sicherungseinrichtungen.

Besonders bevorzugt ist eine Variante, bei der der Sicherungsidentifikator und das Sicherungsverifikationsmittel zueinander korrespondierend bestimmt oder erzeugt werden, beispielsweise als Schlüsselpaar oder dergleichen, vorzugsweise generiert jeweils auf einer zufälligen Basis. Alternativ oder zusätzlich kann der Entsicherungsidentifikator und das Entsicherungsverifikationsmittel zueinander korrespondierend bestimmt oder erzeugt werden, beispielsweise als Schlüsselpaar oder dergleichen. In diesem Fall ist es bevorzugt, dass der Sicherungsidentifikator und/oder Entsicherungsidentifikator ausgegeben und/oder übermittelt werden und das Sicherungsverifikationsmittel sowie das Entsicherungsverifikationsmittel an die ausgewählte Sicherungseinrichtung übermittelt werden, vorzugsweise durch die Zentraleinrichtung. Diese Variante ist besonders bevorzugt, da sie in vorteilhafter Weise ohne vorbestimmte oder zuvor abgespeicherte bzw. abgelegte Daten auskommt, wodurch das vorschlagsgemäße System besonders robust gegenüber Kompromittierungen ist.

Die voranstehenden Varianten können alternativ oder kumulativ realisiert werden. Insbesondere ist auch eine Kombination von mehreren der aufgeführten Varianten in demselben System möglich. Beispielsweise kann für solche Sicherungseinrichtungen, die eine Datenverbindung mit der Zentraleinrichtung aufweisen oder datentechnisch mit der Zentraleinrichtung verbindbar sind, die Variante mit dem Schlüsselpaar und für Datentechnisch nicht oder nicht dauerhaft mit der Zentraleinrichtung verbindbare Sicherungseinrichtungen die Variante, bei der die Sicherungsverifikationsmittel und/oder Entsicherungsverifikationsmittel bereits vorbestimmt sind verwendet werden. Hierdurch ist die Nutzung des Systems in vorteilhafter Weise hinsichtlich der Verifikation mit dem Sicherungsidentifikator und/oder dem Entsicherungsidentifikator für alle Sicherungseinrichtungen gleich, Dies kann auch einen unabhängigen Aspekt der vorliegenden Erfindung bilden. Es sind jedoch auch andere Kombinationen von Varianten möglich und vorteilhaft.

Vorzugsweise ist die Zentraleinrichtung dazu ausgebildet, ein erstes Reservierungsbestätigungssignal mit dem Sicherungsidentifikator und ohne den Entsicherungsidentifikator und ein vom ersten unterschiedliches zweites Reservierungsbestätigungssignal mit dem Entsicherungsidentifikator und ohne den Sicherungsidentifikator zu erzeugen und, vorzugsweise, das erste und das zweite Reservierungsbestätigungssignal an unterschiedliche Identifikationseinrichtungen zu senden. Hierdurch wird eine Sicherung und Entsicherung durch unterschiedliche Nutzer ermöglicht.

Weiter ist bevorzugt, dass die Zentraleinrichtung eine Sicherungseinrichtungsdatenbank aufweist, in der zu den Sicherungseinrichtungen jeweils Sicherungseinrichtungsparameter korrespondierend zu Eigenschaften der jeweiligen Sicherungseinrichtung abgelegt sind, insbesondere korrespondierend zu Eigenschaften bezüglich eines Standorts und/oder einer Kapazität und/oder einer Belegung und/oder einer Zugriffsberechtigung der jeweiligen Sicherungseinrichtung. Es hat sich gezeigt, dass bei Abfrage von Informationen von einer Vielzahl von Sicherungseinrichtungen die Auswahl der geeigneten Sicherungseinrichtung zeitraubend sein kann. In vorteilhafter Weise ermöglicht die Sicherungseinrichtungsdatenbank eine wesentlich schnellere und effizientere Auswahl der Sicherungseinrichtung.

Die Zentraleinrichtung ist vorzugsweise dazu ausgebildet, einen Sicherungseinrichtungsparameter korrespondierend zu einer Eigenschaft einer Sicherungseinrichtung zu empfangen und/oder von der/den Sicherungseinrichtung/-en abzurufen und/oder in einer/der Sicherungseinrichtungsdatenbank abzulegen, vorzugsweise zumindest einen Sicherungseinrichtungsparameter korrespondierend zu einem Sensorsignal eines Verfügbarkeitssensors der Sicherungseinrichtung.

Die Sicherungseinrichtung(en) kann/können einen Sensor, insbesondere eine Innenraumüberwachung aufweisen. Hierdurch kann festgestellt werden, ob ein Packstück aktuell durch die Sicherungseinrichtung gesichert ist oder nicht. Wenn mit dem Sensor festgestellt wird, dass aktuell kein Packstück mit der Sicherungseinrichtung gesichert ist, wird vorzugsweise signalisiert, dass die Sicherungseinrichtung verfügbar ist. Alternativ oder zusätzlich wird signalisiert und/oder als Sicherungseinrichtungsparameter abgelegt, abgespeichert oder übermittelt, dass die Sicherungseinrichtung nicht verfügbar ist, wenn aktuelle in Packstück mit der Sicherungseinrichtung gesichert ist. Entsprechend kann der Sicherungseinrichtungsparameter eine Verfügbarkeit repräsentieren. Alternativ oder zusätzlich kann der Sicherungseinrichtungsparameter auch eine Belegung bzw. nicht-Verfügbarkeit repräsentieren, wenn eine Sicherung bevorsteht.

In einem Aspekt der vorliegenden Erfindung ist es bevorzugt, dass die Sicherungseinrichtung das Sicherungsidentifikationsmittel nach einem einmaligen Einsatz ein zweites oder weiteres Mal akzeptiert, falls mit dem Sensor oder auf sonstige Weise festgestellt wird, das bei der erstmaligen Nutzung kein Packstück gesichert worden ist.

Alternativ oder zusätzlich ist es bevorzugt, dass die Sicherungseinrichtung das Sicherungsidentifikationsmittel nicht akzeptiert, wenn mit dem Sensor oder auf sonstige Weise festgestellt wird, dass die Sicherungseinrichtung noch belegt ist bzw. aktuell ein Packstück sichert. Hierbei kann ein unberechtigter Zugriff auf ein Packstück vermieden werden.

Es ist besonders bevorzugt, dass die Sicherungseinrichtungsdatenbank Werte oder Eigenschaften der jeweiligen Sicherungseinrichtung als Sicherungseinrichtungsparameter, insbesondere Volumina, Breiten, Längen, Höhen, und/oder Tragkraft bezüglich des Gewichts eines zu sichernden Packstücks aufweist.

Alternativ oder zusätzlich sind oder bilden eine Kühl- oder Temperiereignung und/oder ein Isolationswert bzgl. thermischer Isolation Sicherungseinrichtungsparameter, die in der Sicherungseinrichungsdatenbank abgelegt sein können.

Es ist bevorzugt, dass die Sicherungseinrichtungsdatenbank in Bezug auf veränderliche Eigenschaften der jeweiligen Sicherungseinrichtung aktualisierbar ist. Veränderliche Eigenschaften der jeweiligen Sicherungseinrichtung sind insbesondere die Belegung bzw. der Status, ob ein Packstück mit der konkreten Sicherungseinrichtung aktuell gesichert ist oder nicht, oder ob eine Fehlfunktion oder eine sonstige Funktion vorliegt oder aktiv ist. Vorzugsweise werden veränderliche Eigenschaften regelmäßig, kontinuierlich, intervallartig, bei einem Verifikationsprozess mit dem Sicherungsidentifikator und/oder mit dem Entsicherungsidentifikator oder durch diesen und/oder in regelmäßigen Abständen, vorzugsweise automatisch, aktualisiert. Vorzugsweise erfolgt eine Ermittlung, eine Übertragung an und/oder ein Abruf durch die Zentraleinrichtung von einer oder mehrerer veränderlicher Eigenschaften der jeweiligen Sicherungseinrichtung nach Ablauf einer Karenzzeit, beispielsweise eine Minute, nach einer Verifikation und/oder bei oder nach Abschluss einer Sicherung oder Entsicherung durch die Sicherungseinrichtung. Hierdurch kann die von der jeweiligen Sicherungseinrichtung zu übermittelnde Datenmenge und der hiermit einhergehende Energieverbrauch minimiert werden. Ferner wird hierdurch die in der Zentraleinrichtung notwendige Rechenleistung verringert.

Der Packstückparameter repräsentiert vorzugsweise Eigenschaften des zu sichernden Packstücks. Insbesondere repräsentiert der Packstückparameter eine Abmessung, eine Länge, eine Breite, eine Höhe, ein Volumen, ein Gewicht, eine Verderblichkeit, eine Stabilität, eine Haltbarkeit, eine Kühlpflicht, ein Isolationswert bezüglich thermischer Isolation und/oder eine Gefahrstoffkennzeichnung des Packstücks bzw. der zu sichernden Ware oder des zu sichernden Gegenstands.

Vorzugsweise ist die Zentraleinrichtung dazu ausgebildet, den Packstückparameter mit den Sicherungseinrichtungsparametern, vorzugsweise die durch den Packstückparameter repräsentierten physikalischen Eigenschaften des Packstücks mit der durch die Sicherungseinrichtungsparameter repräsentierte Kapazität der Sicherungseinrichtung, zu vergleichen. Hierdurch kann in vorteilhafter Weise ermittelt werden, ob ein Packstück physikalisch kompatibel mit einer bestimmten der Sicherungseinrichtungen ist. Vorzugsweise werden physikalisch inkompatible Sicherungseinrichtungen daraufhin verworfen und/oder physikalisch grundsätzlich kompatible Sicherungseinrichtungen ausgewählt, markiert, in eine Liste übernommen oder auf sonstige Weise für einen weiteren Auswahlprozess vorgesehen.

Gemäß einem auch unabhängig realisierbaren Aspekt der vorliegenden Erfindung ist vorgesehen, dass die Zentraleinrichtung den Packstückparameter daraufhin überprüft, ob dieser eine Kohlpflicht, Verderblichkeit, Stabilität und/oder Haltbarkeit repräsentiert. Falls der Packstückparameter eine Angabe bzw. einen Wert zu der Verderblichkeit, der Stabilität, der Haltbarkeit und/oder der Kühlpflichtigkeit aufweist, werden vorzugsweise solche Sicherungseinrichtungen verworfen, die für eine Lagerung des Packstücks ungeeignet sind, insbesondere also gemäß Überprüfung mit den Sicherungseinrichtungsparameter einen zu geringen oder auf sonstige Weise ungeeigneten Isolationswert bezüglich thermischer Isolation und/oder einen mangelnde Kühl- oder Temperiereignung aufweisen.

In einem weiteren, auch unabhängig realisierbaren Aspekt der vorliegenden Erfindung, der auch mit dem vorherigen Aspekt kombiniert werden kann, weist der Packstückparameter Informationen bzw. Werte zu einer Verderblichkeit, einer Stabilität und/oder einer Haltbarkeit auf, die vorzugsweise eine zeitliche und/oder Temperaturabhängigkeit berücksichtigen.

Vorzugsweise wird eine individuelle Verderblichkeit, Stabilität und/oder Haltbarkeit des zu sichernden Packstücks für eine oder mehrere der Sicherungseinrichtungen auf Basis der zu der jeweiligen Sicherungseinrichtung korrespondierenden Sicherungsparameter bestimmt. Insbesondere wird eine (Worst-Case) Temperatur oder ein (Worst-Case) Temperaturverlauf des zu sichernden Packstücks bei Sicherung des Packstücks mit der jeweiligen Sicherungseinrichtung berechnet, simuliert oder prognostiziert, vorzugsweise unter Verwendung der Sicherungseinrichtungsparameter.

Vorzugsweise werden solche Sicherungseinrichtungen, die bei Sicherung des zu sichernden Packstücks zu einer Verderblichkeit, Stabilität oder Haltbarkeit unterhalb eines Schwellwerts führen verworfen würden, und/oder es werden solche Sicherungseinrichtungen ausgewählt, markiert, in eine Liste übernommen oder auf sonstige Weise für einen weiteren Auswahlprozess vorgesehen, für die die Verderblichkeit, Stabilität und/oder Haltbarkeit des zu sichernden Packstücks einen Schwellwert bzw. eine Mindestanforderung erreicht oder überschreitet. Vorzugsweise ist die Zentraleinrichtung dazu ausgebildet, den Zeitanfrageindikator mit dem Sicherungseinrichtungsparameter zu vergleichen, vorzugsweise wobei die durch den Sicherungseinrichtungsparameter repräsentierte Verfügbarkeit der jeweiligen Sicherungseinrichtung mit der/dem durch den Zeitanfrageindikator identifizierten Zeit, Datum, und/oder Zeitraum verglichen wird, vorzugsweise durch die Zentraleinrichtung . Hierdurch kann in vorteilhafter Weise ermittelt werden, ob eine bestimmte der Sicherungseinrichtungen zu dem durch den Zeitanfrageindikator bestimmten Zeitpunkt verfügbar oder bereits belegt ist.

Gemäß einem Aspekt der vorliegenden Erfindung werden solche Sicherungseinrichtungen verworfen, die nicht verfügbar sind und/oder solche Sicherungseinrichtungen ausgewählt, markiert, in eine Liste übernommen oder auf sonstige Weise für einen weiteren Auswahlprozess vorgesehen, die in den durch den Zeitanfrageindikator identifizierten Zeitraum, zu dem durch den Zeitanfrageindikator identifizierten Datum oder in der durch den Zeitanfrageindikator identifizierten Zeit verfügbar ist. Alternativ oder zusätzlich kann vorgesehen sein, dass (auch) solche Sicherungseinrichtungen ausgewählt, markiert, in eine Liste übernommen oder auf sonstige Weise für einen weiteren Auswahlprozess vorgesehen werden, die die unter vorbestimmten Bedingungen, insbesondere geringfügig, von dem durch den Zeitanfrageindikator identifizierten Zeitraum, von dem durch den Zeitanfrageindikator identifizierte Datum und/oder von der durch den Zeitanfrageindikator identifizierten Zeit (geringfügig) abweichen. Hier ist es besonders bevorzugt, dass der Zeitreservierungsindikator mit dem Buchungssignal und/oder der Zeitbestätigungsindikator mit dem Reservierungsbestätigungssignal übermittelt werden. In anderen Fällen ist dies nicht zwingend erforderlich.

Vorzugweise ist die Zentraleinrichtung dazu ausgebildet, den Ortsanfrageindikator mit dem Sicherungseinrichtungsparameter zu vergleichen, vorzugsweise wobei eine Entfernung zwischen dem durch den Ortsanfrageindikator identifizierten Zielort und dem jeweiligen durch den Sicherungseinrichtungsparameter identifizierten Standort der Sicherungseinrichtungen bestimmt wird. Durch Vergleich der Entfernungen können solche Sicherungseinrichtungen priorisiert werden, die eine geringe Entfernung aufweisen. Besonders bevorzugt werden die Entfernungen verwendet, um die Sicherungseinrichtungen ihrer Entfernung nach zu sortieren oder zu priorisieren. So kann im Folgenden die Sicherungseinrichtung ausgewählt werden kann, die die geringste Entfernung aufweist bzw. der die geringste Entfernung zugeordnet ist und, vorzugsweise, die weitere Kriterien bezüglich Kompatibilität und Verfügbarkeit erfüllt.

Insgesamt ist die Zentraleinrichtung vorzugsweise dazu ausgebildet, diejenige Sicherungseinrichtung auszuwählen, die gemäß dem Ergebnis des Vergleichs des Packstückparameters mit dem Sicherungseinrichtungsparametern physikalisch zur Sicherung geeignet ist, und/oder gemäß dem Ergebnis des Vergleichs des Zeitanfrageindikators mit den Sicherungseinrichtungsparametern verfügbar ist, und/oder gemäß dem Ergebnis des Vergleichs des Ortsanfrageindikator mit dem Sicherungseinrichtungsparametern den geringsten Abstand von dem Zielort aufweist.

Besonders bevorzugt werden in einem ersten Schritt solche Sicherungseinrichtungen selektiert, in einer Liste übernommen, markiert oder vorausgewählt, die physikalisch zur Sicherung des Packstücks geeignet und verfügbar sind. Alternativ oder zusätzlich werden solche Sicherungseinrichtungen deselektiert, verworfen oder markiert, die entweder physikalisch zur Sicherung ungeeignet und/oder nicht verfügbar sind, zumindest in dem zu dem Zeitanfrageindikator korrespondierenden Zeitraum. Die Sicherungseinrichtungen, die physikalisch zur Sicherung des Packstücks geeignet und verfügbar sind, werden daraufhin in einem zweiten Schritt vorzugsweise bezüglich ihres Abstands zum Zielort untersucht. Vorzugsweise wird diejenige Sicherungseinrichtung ausgewählt, die physikalisch zur Sicherung Packstücks geeignet und verfügbar ist und gleichzeitig den geringsten Abstand zu dem Zielort aufweist.

Die Zentraleinrichtung weist vorzugsweise die Sicherungseinrichtungsdatenbank auf, in der vorzugsweise Sicherungseinrichtungsparameter abgelegt, abgespeichert und/oder vorgehalten sind. Gemäß einem Aspekt der vorliegenden Erfindung ist die Sicherungseinrichtungsdatenbank hierarchisch und/oder aggregiert aufgebaut. Dies ermöglicht eine beschleunigte Navigation durch die Datenbank und Selektion grundsätzlich infrage kommender Sicherungseinrichtungen.

Vorzugsweise werden vor oder bei dem Auswahlprozess nur solche Sicherungseinrichtungen berücksichtigt, die in einem gewissen Gebiet, beispielsweise einem Postleitzahlenbereich, liegen. Hierzu kann eine Vorselektion von Sicherungseinrichtungen bzw. hierzu korrespondierenden Datensätzen aus der Sicherungseinrichtungsdatenbank erfolgen. Durch diese Vorselektion wird vorzugsweise ein Datenbankauszug gebildet. Der Datenbankauszug weist vorzugsweise eine Teilmenge der insgesamt verfügbaren Sicherungseinrichtungen bzw. der hierzu korrespondierenden Datensätze auf. Auf einer solchen Selektion, einem solchen Datenbankauszug bzw. einer solchen Teilmenge der insgesamt verfügbaren Sicherungseinrichtungen bzw. der hierzu korrespondierende Datensätze erfolgt vorzugsweise die Auswahl der Sicherungseinrichtung, insbesondere durch die Zentraleinrichtung. Die Vorselektion erfolgt vorzugsweise vor dem ersten Schritt und/oder Basis des Ortsanfrageindikators oder des hierdurch identifizierten Zielorts.

Ein weiterer, auch unabhängig realisierbarer Aspekt der vorliegenden Erfindung betrifft ein Verfahren zur Sicherung von Packstücken gegen unberechtigten Zugriff, vorzugsweise zum Empfang und/oder Versand der Packstücke, mit mehreren Sicherungseinrichtungen zur Sicherung eines Packstücks und mit einer Zentraleinrichtung, die dazu ausgebildet ist, ein Reservierungssignal zu empfangen, wobei auf Basis des Reservierungssignals eine der Sicherungseinrichtungen ausgewählt wird, im Folgenden ausgewählte Sicherungseinrichtung genannt, und durch die Zentraleinrichtung ein Buchungssignal und/oder ein Reservierungsbestätigungssignal erzeugt und auszugeben wird/werden, wobei die ausgewählte Sicherungseinrichtung durch Verifikation mit dem Buchungssignal und/oder dem Reservierungssignal das Packstück mit der ausgewählten Sicherungseinrichtung sichert oder entsichert.

Allgemein können die in Zusammenhang mit dem System, der Zentraleinrichtung, der Reservierungseinrichtung und/oder der/den Sicherungseinrichtung(en) beschriebenen Aspekte auch Verfahrensmerkmale des vorschlagsgemäßen Verfahrens bilden, insbesondere wenn die jeweilige Einrichtung zur Durchführung eines Verfahrens Schritt oder dergleichen ausgebildet ist.

Ein weiterer, auch unabhängig realisierbarer Aspekt der vorliegenden Erfindung betrifft eine Zentraleinrichtung für ein vorschlagsgemäßes System zur Sicherung von Packstücken gegen unberechtigten Zugriff, vorzugsweise zum Empfang und/oder Versand der Packstücke. Hierbei ist besonders bevorzugt, dass die Zentraleinrichtung eine Benutzerschnittstelle zur Datenverbindung mit mehreren Sicherungseinrichtungen zur Sicherung eines Packstücks aufweist, wobei die Zentraleinrichtung dazu ausgebildet ist, ein Reservierungssignal zu empfangen und auf Basis des Reservierungssignals eine der Sicherungseinrichtungen auszuwählen, im Folgenden ausgewählte Sicherungseinrichtung genannt, und wobei die Zentraleinrichtung dazu ausgebildet ist, ein Buchungssignal und/oder ein Reservierungsbestätigungssignal zu erzeugen und auszugeben, wobei das Buchungssignal und/oder Reservierungsbestätigungssignal dazu ausgebildet ist, dass das Packstück bei Verifikation mit dem Buchungssignal und/oder dem Reservierungssignal mit der ausgewählten Sicherungseinrichtung sicherbar oder entsicherbar ist.

Weitere, auch unabhängig realisierbare Aspekte der vorliegenden Erfindung betreffen die Verwendung der Zentraleinrichtung zum Versand und/oder Empfang von Packstücken oder die Verwendung mehrerer Sicherungseinrichtungen, die zentral verwaltet werden, vorzugsweise durch die Zentraleinrichtung.

Weitere Aspekte, Vorteile und Eigenschaften der vorliegenden Erfindung ergeben sich aus den Ansprüchen und aus der folgenden Beschreibung eines bevorzugten Ausführungsbeispiels anhand der Zeichnung. Es zeigt:
- Fig. 1: ein vorschlagsgemäßes System;
- Fig. 2: unterschiedlichen Standorten zugeordnete Sicherungseinrichtungen;
- Fig. 3: eine vorschlagsgemäße Sicherungseinrichtung;
- Fig. 4: eine vereinfachte, schematische Ansicht des vorschlagsgemäßen Systems bei Sicherung des Packstücks; und
- Fig. 5: eine vereinfachte, schematische Ansicht des vorschlagsgemäßen Systems bei Entsicherung des Packstücks.

In den Figuren werden für gleiche oder ähnliche Teile dieselben Bezugszeichen verwendet, wobei gleiche oder ähnliche Eigenschaften und Vorteile erreicht werden können, auch wenn von einer wiederholten Beschreibung abgesehen wird.

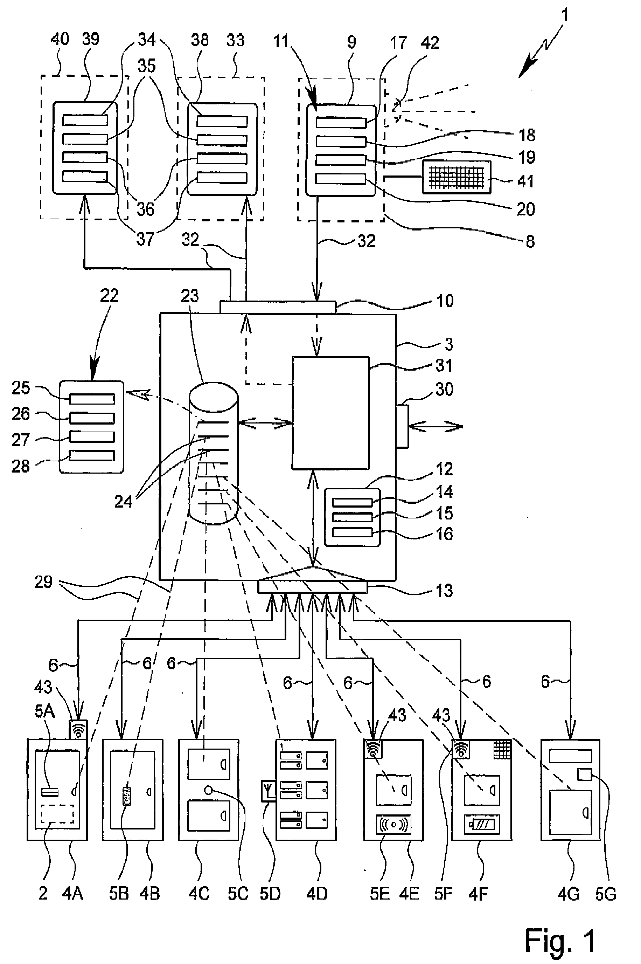

Fig. 1 zeigt ein vorschlagsgemäßes System 1 zur Sicherung von Gegenständen, insbesondere Packstücken 2, gegen unberechtigten Zugriff. Das System ist vorzugsweise zum Empfang und/oder Versand der Gegenstände bzw. Packstücke 2 ausgebildet.

Das System 1 weist eine Zentraleinrichtung 3 zur Steuerung mehrerer Sicherungseinrichtungen 4A bis 4K zur Sicherung der Gegenstände 2 gegen unberechtigten Zugriff auf.

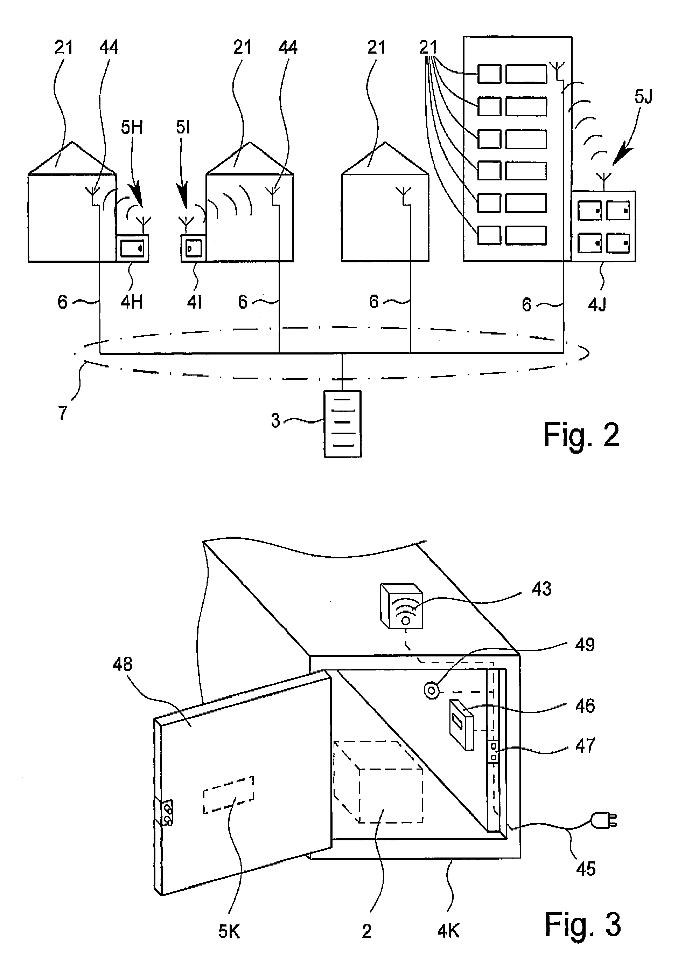

Wie beispielhaft in Fig. 2 dargestellt, sind die Sicherungseinrichtung 4A bis 4K und die Zentraleinrichtung 3 vorzugsweise baulich voneinander getrennt realisiert und/oder an unterschiedlichen Standorten angeordnet. Vorzugsweise sind die Sicherungseinrichtungen 4A bis 4K jeweils unterschiedlichen Wohneinheiten 6 zugeordnet. Hier sind jedoch auch andere Lösungen möglich.

Die Sicherungseinrichtungen 4A bis 4K weisen vorzugsweise jeweils eine Verifikationseinrichtung 5A bis 5K zur Verifikation der Berechtigung zur Sicherung und/oder Entsicherung eines Packstücks 2 auf.

Bevorzugt ist jeweils eine Verifikationseinrichtung 5A bis 5K mit einer korrespondierenden Sicherungseinrichtung 4A bis 4K elektrisch und/oder mechanisch verbunden. Hierbei sind unterschiedliche Verifikationseinrichtungen 5A bis 5K möglich.

Besonders bevorzugt weisen die Sicherungseinrichtungen 4A bis 4K jedoch gleiche oder zumindest jeweils eine gleichartige Verifikationseinrichtung 5A bis 5K auf. Hierbei kann es sich um einen Leser 5A, insbesondere Chipkartenleser, Magnetstreifenleser, Barcodeleser, QR-Code-Leser oder dergleichen handeln. Alternativ oder zusätzlich kann es sich um eine Tastatur oder ein Pin-Pad 5B, um einen IrisScanner oder eine Kamera 5C, eine Funkschnittstelle 5D, eine NFC bzw. Nahfeldkommunikationsschnittstelle 5E, eine WLAN-Schnittstelle 5F oder eine sonstige, besonders bevorzugt drahtlose Schnittstelle 5G bis 5K handeln.

Im Darstellungsbeispiel gemäß Fig. 1 und 2 sind den unterschiedlichen Sicherungseinrichtungen 4A bis 4K lediglich aus Veranschaulichungsgründen unterschiedliche Verifikationseinrichtungen 5A bis 5K zugeordnet. Es ist jedoch bevorzugt, dass innerhalb eines System 1 alle Sicherungseinrichtungen 4A bis 4K zumindest eine gleichartige Verifikationseinrichtung 5A bis 5K aufweisen, besonders bevorzugt einen Scanner zum Abscannen eines Displays und/oder eine Nahfeldkommunikationsschnittstelle zur Verifikation mittels Nahfeldtechnologie.

Die Sicherungseinrichtungen 4A bis 4K weisen vorzugsweise jeweils eine Datenverbindung 6 zur Zentraleinrichtung 3 auf. Im Darstellungsbeispiel gemäß Fig. 2 weist die Datenverbindung 6 bzw. weisen die Datenverbindungen 6 ein Netzwerk 7, insbesondere das Internet, auf oder werden hierdurch gebildet. Hier sind jedoch auch andere Lösungen möglich. Insbesondere weist die Datenverbindung 6 eine Mobilfunkverbindung, eine WLAN-Verbindung und/oder eine TCP/IP oder Internetverbindung auf.

Das System 1 weist vorzugsweise ferner eine Reservierungseinrichtung 8 auf, mit der ein Reservierungssignal 9 erzeugt und/oder an die Zentraleinrichtung 3 übermittelt werden kann. Die Zentraleinrichtung 3 weist vorzugsweise eine Benutzerschnittstelle 10 zum Empfang des Reservierungssignals 9 auf.

Das Reservierungssignal 9 ist vorzugsweise ein Signal, das Informationen für eine Reservierung oder Buchung einer Sicherungseinrichtung 4A bis 4K und/oder über ein zu sicherndes bzw. zu entsicherndes Packstück 2 aufweist.

Das Reservierungssignal 9 weist vorzugsweise Reservierungsinformationen 11 zu einem zu sichernden Gegenstand 2 auf. Auf Basis der Reservierungsinformationen 11 ermittelt die Zentraleinrichtung 3 eine der für den zu sichernden Gegenstand 2 geeignete Sicherungseinrichtung 4A bis 4K. Die ermittelte Sicherungseinrichtung 4A bis 4K wird vorzugsweise durch die Zentraleinrichtung 3 ausgewählt und/oder dem Reservierungssignal 9 oder Teilen hiervon zugeordnet. Die auf diese oder eine sonstige Weise ausgewählte und/oder dem Reservierungssignal 9 oder Teilen hiervon zugeordnete Sicherungseinrichtung 4A bis 4K wird im Folgenden ausgewählte bzw. zugeordnete Sicherungseinrichtung 4A bis 4K genannt.

Die Zentraleinrichtung 3 steuert vorzugsweise die Sicherungseinrichtungen 4A bis 4K in Abhängigkeit von der Zuordnung. Hierzu ist besonders bevorzugt, dass die Zentraleinrichtung 3 ein Buchungssignal 12 zur Steuerung der zugeordneten Sicherungseinrichtung 4A bis 4K erzeugt. Mit diesem Buchungssignal 12 kann die Zentraleinrichtung 3 die ausgewählte bzw. zugeordnete Sicherungseinrichtung 4A bis 4K derart steuern, dass der Gegenstand bzw. das Packstück 2 mit der ausgewählten bzw. zugeordneten Sicherungseinrichtung 4A bis 4K sicherbar oder entsicherbar ist.

Vorzugsweise weisen die Sicherungseinrichtungen 4A bis 4K jeweils einen Transceiver, insbesondere zum Empfang des Buchungssignals 12 von der Zentraleinrichtung 3, auf.

Das Buchungssignal 12 wird vorzugsweise über eine Sicherungseinrichtungsschnittstelle 13 und/oder die Datenverbindung(en) 6 an die zugeordnete bzw. ausgewählte Sicherungseinrichtung 4A bis 4K übermittelt.

Das Buchungssignal 12 weist vorzugsweise ein Sicherungsverifikationsmittel 14, ein Entsicherungsverifikationsmittel 15 und/oder einen Zeitreservierungsindikator 16 auf.

Das Sicherungsverifikationsmittel 14 ist vorzugsweise dazu ausgebildet, einen zur Sicherung des Packstücks 2 berechtigten Nutzer zu verifizieren. Das Entsicherungsverifikationsmittel 15 ist vorzugsweise dazu ausgebildet, einen zur Entsicherung des Packstücks 2 berechtigten Nutzer zu verifizieren. Der Zeitreservierungsindikator 16 ist vorzugsweise dazu ausgebildet, einen Zeitraum, in dem das Packstück 2 mit dem Sicherungssystem 4A bis 4K gesichert werden soll, zu identifzieren.

Insbesondere ist das Buchungssignal 12 ein Datensatz oder weist einen Datensatz auf, der die zugeordnete bzw. ausgewählte Sicherungseinrichtung 4A bis 4K zur Sicherung und/oder Entsicherung des Gegenstands bzw. Packstücks 2 innerhalb eines identifizierten Zeitraums steuert.

Das Reservierungssignal 9 weist vorzugsweise, insbesondere als Reservierungsinformationen 11, einen Packstückparameter 17 und/oder einen Berechtigungsidentifikator 18 und/oder einen Zeitanfrageindikator 19 und/oder einen Ortsanfrageindikator 20 auf.

Der Packstückparameter 17 korrespondiert vorzugsweise zu einem oder mehreren physikalischen Eigenschaften des zu sichernden Packstücks 2. Der Packstückparameter 17 weist besonders bevorzugt eine Länge, Breite, Höhe und/oder ein Gewicht des zu sichernden Packstücks 2 auf. Hierdurch kann ermittelt werden, ob eine Sicherungseinrichtung 4A bis 4K grundsätzlich bzw. physikalisch zur Sicherung des Packstücks 2 geeignet ist oder nicht.

Der Berechtigungsidentifikator 18 ist vorzugsweise zur Identifikation einer Berechtigung der Sicherung und/oder Entsicherung des zu sichernden Packstücks 2 ausgebildet. Mit dem Berechtigungsidentifikator 18 kann ein Nutzer, der mit einer Sicherungseinrichtung 4A bis 4K einen Gegenstand bzw. ein Packstück 2 sichern möchte, identifiziert und/oder die Berechtigung zur Nutzung einer konkreten Sicherungseinrichtung 4A bis 4K überprüft werden. Die Übermittlung des Berechtigungsidentifikators 18 als Teil des Reservierungssignals 9 ist nicht zwingend, beispielsweise wenn ein berechtigter Nutzer sich zuvor bei der Zentraleinrichtung 3 registriert oder angemeldet hat.

Der Zeitanfrageindikator 19 ist vorzugsweise zur Identifikation eines Datums, einer Zeit und/oder eines Zeitraums ausgebildet, zu dem/der der Gegenstand bzw. das Packstück 2 mit einer Sicherungseinrichtung 4A bis 4K gesichert werden soll.

Der Ortsanfrageindikator 20 ist vorzugsweise dazu ausgebildet, einen Zielort für die Sicherung des Gegenstands bzw. Packstücks 2 zu identifizieren. Ein Zielort 21 ist bzw. sind besonders bevorzugt eine Wohnadresse, eine Anschrift, Wohneinheit, globale Position einer Wohneinheit und/oder (GPS-)Koordinaten oder weist solche auf. Der Ortsanfrageindikator 20 weist also vorzugsweise eine Adresse und/oder Koordinaten oder sonstige Positionsinformationen auf.

Die Zentraleinrichtung 3 hat vorzugsweise Zugriff auf Sicherungseinrichtungsparameter 22. Die Sicherungseinrichtungsparameter 22 korrespondieren vorzugsweise zu einer oder mehrerer Eigenschaften einer Sicherungseinrichtung 4A bis 4K. Vorzugsweise hat die Zentraleinrichtung 3 Zugriff auf Sicherungseinrichtungsparameter 22 aller Sicherungseinrichtungen 4A bis 4K des Systems 1.

Die Sicherungseinrichtungsparameter 22 weisen vorzugsweise eine physikalische Eigenschaft, insbesondere Länge, Breite und/oder Höhe eines Aufnahmevolumens, eine Tragfähigkeit in Bezug auf das Gewicht eines zu sichernden Packstücks 2, eine Verfügbarkeit bzw. Belegung und/oder eine Funktionsfähigkeit der jeweiligen Sicherungseinrichtung 4A bis 4K oder hierzu korrespondierenden Parameter auf.

Die Sicherungseinrichtungsparameter 22 können durch die Zentraleinrichtung 3 bedarfsweise und/oder unmittelbar, insbesondere über Datenverbindungen 6, von der jeweiligen Sicherungseinrichtung 4A bis 4K abgerufen und/oder empfangen werden. Alternativ oder zusätzlich sind die Sicherungseinrichtungsparameter 22 in einer Sicherungseinrichtungsdatenbank 23 abgelegt oder abgespeichert. Vorzugsweise werden Sicherungseinrichtungsparameter 22 durch die Zentraleinrichtung in der Sicherungseinrichtungsdatenbank 23 abgelegt oder abgespeichert.

Die Sicherungseinrichtungsdatenbank 23 ist vorzugsweise Teil der Zentraleinrichtung 3, der Zentraleinrichtung 3 zugeordnet oder datentechnisch mit der Zentraleinrichtung 3 verbunden. Die Sicherungseinrichtungsdatenbank 23 weist vorzugsweise ein oder mehrere Datensätze 24 auf, insbesondere Datensätze 24 korrespondierend jeweils zu einer der Sicherungseinrichtungen 4A bis 4K.

Vorzugsweise weisen die Datensätze 24 Parameter bezüglich physikalischer Eigenschaften 25, bezüglich Verfügbarkeitseigenschaften 26 und/oder bezüglich einer Funktionsfähigkeit 27 und/oder bezüglich einer Berechtigung 28 zur Nutzung der jeweiligen Sicherungseinrichtung 4A bis 4K auf.

Die Datensätze 24 der Sicherungseinrichtungsdatenbank 23 sind vorzugsweise jeweils einer Sicherungseinrichtung 4A bis 4K zugeordnet. In Fig. 1 sind Zuordnungen 29 durch die gestrichelten Linien angedeutet.

Vorzugsweise ist das System 1 dazu ausgebildet, die Sicherungseinrichtungsparameter 22 zumindest teilweise zu aktualisieren.

Besonders bevorzugt wird der Parameter bezüglich einer Verfügbarkeit 26 regelmäßig, bei Bedarf und/oder ereignisgesteuert, insbesondere bei Änderung einer Verfügbarkeit, aktualisiert.

Alternativ oder zusätzlich können auch der Parameter bezüglich einer Funktionsfähigkeit 27 und/oder der Parameter bezüglich einer Berechtigung 28 aktualisiert werden. Der Parameter bezüglich einer Funktionsfähigkeit 27 wird vorzugsweise dann aktualisiert, wenn sich der korrespondierende Zustand der jeweiligen Sicherungseinrichtung 4A bis 4K ändert. Insbesondere wird der Parameter bezüglich einer Funktionsfähigkeit 27 automatisch geändert, wenn einer Sicherungseinrichtung 4A bis 4K ein Fehler auftritt. In diesem Fall ist es bevorzugt, dass die jeweilige Sicherungseinrichtung ein Fehlersignal an die Zentraleinrichtung 3 übermittelt, woraufhin die Zentraleinrichtung 3 den Parameter bezüglich einer Funktionsfähigkeit 27 entsprechend ändert oder anpasst.

Der Parameter bezüglich einer Berechtigung 28 kann durch einen Inhaber bzw. Verfügungsberechtigten der jeweiligen Sicherungseinrichtung 4A bis 4K konfiguriert werden oder konfigurierbar sein. Insbesondere weist die jeweilige Sicherungseinrichtung 4A bis 4K eine Schnittstelle zur Konfiguration einer Berechtigung auf bzw. zur Anpassung oder Änderung des Parameters bezüglich der Berechtigung 28. Alternativ oder zusätzlich kann die Zentraleinrichtung 3 ein Konfigurationsinterface 30, insbesondere ein Webinterface, aufweisen, über das die Sicherungseinrichtungsparameter 22, insbesondere der Parameter bezüglich einer Berechtigung 28, konfigurierbar sein kann. Hier sind jedoch auch andere Lösungen möglich.

Vorzugsweise wird der Parameter bezüglich einer Verfügbarkeit 26 regelmäßig und/oder automatisch aktualisiert. Hierzu kann die jeweilige Sicherungseinrichtung 4A bis 4K mit der Zentraleinrichtung 3, insbesondere über die Datenverbindung 6, kommunizieren, wobei Verfügbarkeitsinformationen von der jeweiligen Sicherungseinrichtung 4A bis 4K an die Zentraleinrichtung 3 übermittelt werden. Die Zentraleinrichtung 3 kann den Parameter bezüglich einer Verfügbarkeit daraufhin ändern, wenn sich gemäß der Verfügbarkeitsinformationen die Verfügbarkeit der jeweiligen Sicherungseinrichtung 4A bis 4K geändert hat.

Bei dem Parameter bezüglich einer Verfügbarkeit 26 handelt es sich insbesondere um einen boolschen Parameter, der den aktuellen Status der jeweiligen Sicherungseinrichtung 4A bis 4K repräsentiert. Beispielsweise ist der Parameter bezüglich einer Verfügbarkeit 26 "1", wenn die zugeordnete bzw. ausgewählte Sicherungseinrichtung 4A bis 4K aktuell kein Packstück gesichert hat, und "0", wenn die jeweilige Sicherungseinrichtung 4A bis 4K aktuell belegt ist bzw. bereits ein Packstück 2 sichert oder umgekehrt. Bedarfsweise kann der Parameter bezüglich einer Verfügbarkeit 26 auch auf andere Weise realisiert werden.

Der/die Parameter bezüglich physikalischer Eigenschaften 25 der jeweiligen Sicherungseinrichtung 4A bis 4K sind vorzugsweise unveränderlich. In einem Aspekt der vorliegenden Erfindung werden zumindest die Parameter bezüglich physikalischer Eigenschaften 25 nicht automatisch, nur manuell, in großen Abständen automatisch oder gar nicht überprüft, von der jeweiligen Sicherungseinrichtung 4A bis 4K abgerufen oder an die Zentraleinrichtung 3 gesendet. Dies bietet den Vorteil einer reduzierten Menge zu übermittelnder Daten, was den Energiebedarf reduziert und die Systemressourcen schont. Hierbei ist zu berücksichtigen, dass das vorschlagsgemäße System vorzugsweise mit mehreren hundert Sicherungseinrichtungen 4A bis 4K, insbesondere mit mindestens 1000 Sicherungseinrichtungen 4A bis 4K betrieben wird. Daher ist die Zentraleinrichtung 3 vorzugsweise ein Rechenzentrum oder Teil hiervon. Der Aufwand und die Kosten zur Realisierung der Zentraleinrichtung 3 sind aufwandsabhängig. Eine Differenzierung bezüglich einer Aktualisierung zwischen den einzelnen Sicherungseinrichtungsparametern 22 in der Sicherungseinrichtungsdatenbank 23 führt also über einen geringeren Rechenbedarf unmittelbar zu einer verbesserten Leistungsfähigkeit der Zentraleinrichtung 3.

Die Zentraleinrichtung 3 ist vorzugsweise dazu ausgebildet, auf Basis eines Anforderungsprofils eine der Sicherungseinrichtungen 4A bis 4K auszuwählen.

Vorzugsweise weist die Zentraleinrichtung 3 ein Auswahlmodul 31 auf. Das Auswahlmodul 31 hat vorzugsweise Zugriff auf die Sicherungseinrichtungsdatenbank 23 und/oder auf die Sicherungseinrichtung 4A bis 4K. Insbesondere ist das Auswahlmodul 31 dazu ausgebildet, einen oder mehrere der Sicherungseinrichtungsparameter 22 aus der Datenbank 23 und/oder von einer oder mehrerer der Sicherungseinrichtung 4A bis 4K abzurufen.

Bei Empfang des Reservierungssignals 9 wird das Reservierungssignal 9 bzw. die Reservierungsinformationen 11 vorzugsweise dem Auswahlmodul 31 zugeführt. Das Auswahlmodul 31 ist vorzugsweise dazu ausgebildet, das Reservierungssignal 9, die Reservierungsinformationen 11, insbesondere den Packstückparameter 17 und/oder den Berechtigungsidentifikator 18 und/oder den Zeitanfrageindikator 19 und/oder den Ortsanfrageindikator 20 mit einem oder mehreren der Sicherungseinrichtungsparameter 22, zu vergleichen. Vorzugsweise erfolgt der Vergleich zwischen zueinander korrespondierenden der Reservierungsinformationen 11 und der Sicherungseinrichtungsparameter 22.

In einem ersten Schritt wird vorzugsweise durch Vergleich des Berechtigungsidentifikators 18 mit dem Parameter bezüglich einer Berechtigung 28 ermittelt, ob oder bezüglich welcher der Sicherungseinrichtungen 4A bis 4K eine Sicherung eines zu dem Reservierungssignal 9 korrespondierenden Packstücks 2 zulässig ist.

Optional kann zuvor oder nach diesem Schritt eine Gruppe von Sicherungseinrichtungen 4A bis 4K vorselektiert und der Vergleich auf die vorselektierten Sicherungseinrichtung 4A bis 4K beschränkt werden. Eine solche Vorselektion erfolgt vorzugsweise gebietsweise, bezüglich einer Region oder bezüglich eines Umkreises um den Zielort 21. Hierdurch kann in vorteilhafter Weise der Auswahlprozess vereinfacht oder beschleunigt werden.

In einem weiteren Schritt wird vorzugsweise mit dem Parameter bezüglich einer Funktionsfähigkeit 27 überprüft, ob die jeweilige Sicherungseinrichtung 4A bis 4K nutzbar ist. Dieser Schritt kann auch vorab oder an einer anderen Stelle erfolgen.

In einem weiteren Schritt wird der Zeitanfrageindikator 19 mit einer Verfügbarkeit der jeweiligen Sicherungseinrichtung 4A bis 4K verglichen. Hierzu kann der jeweilige Datensatz 24 bzw. der Parameter bezüglich einer Verfügbarkeit 26 einen Kalender oder eine sonstige Information bezüglich eines zeitlichen Ablaufs der Verfügbarkeit der jeweiligen Sicherungseinrichtung 4A bis 4K aufweisen. Vorzugsweise wird durch einen Vergleich des Zeitanfrageindikators 19 mit dem Parameter bezüglich einer Verfügbarkeit 26 ermittelt, ob in dem durch den Zeitanfrageindikator 19 bestimmten Zeitraum eine Verfügbarkeit der jeweiligen Sicherungseinrichtung 4A bis 4K vorliegt.

Vorzugsweise werden solche (vorselektierte) Sicherungseinrichtung 4A bis 4K selektiert, markiert oder in einer Liste aufgenommen, die sowohl verfügbar und funktionsfähig sind als auch eine Berechtigung und physikalische Eigenschaften aufweisen, die eine Sicherung des Packstücks 2 ermöglichen.

In einem weiteren, vorzugsweise nachfolgenden, Schritt wird vorzugsweise der Ortsanfrageindikator 20 mit einem Standortparameter der jeweiligen Sicherungseinrichtung 4A bis 4K verglichen. Der Standortparameter ist im Darstellungsbeispiel Teil des Parameters bezüglich physikalischer Eigenschaften 25 oder bildet diesen. Alternativ oder zusätzlich kann dieser jedoch auch separat bzw. unabhängig realisiert werden. Vorzugsweise wird durch den Vergleich des Ortsanfrageindikators 20 mit dem Sicherungseinrichtungsparameter 22, insbesondere dem Parameter bezüglich physikalischer Eigenschaften 25 bzw. dem Standortparameter, ein Abstand zwischen dem durch den Ortsanfrageindikator 20 repräsentierten Zielort 21 und dem jeweiligen Standort der Sicherungseinrichtung 4A bis 4K ermittelt. Eine solche Abstandsbestimmung erfolgt insbesondere als geografischer Abstand in Bezug auf eine Luftlinie oder unter Berücksichtigung von Kartenmaterial hinsichtlich einer Strecke, Laufstrecke, Laufzeit, Fahrtzeit o. dgl.

Vorzugsweise weist das System 1 bzw. die Zentraleinrichtung 3 einen Schwellwert für den Abstand auf, wobei zu weit entfernte Sicherungseinrichtung 4A bis 4K verworfen und/oder solche Sicherungseinrichtung 4A bis 4K mit geringem Abstand zum Zielort 21 bevorzugt oder priorisiert werden.

Vorzugsweise wird mit dem Auswahlmodul 31 auf Basis eines oder mehrerer der Vergleiche bzw. Selektionen eine konkrete der Sicherungseinrichtung 4A bis 4K ausgewählt. Hierbei wird vorzugsweise diejenige Sicherungseinrichtung 4A bis 4K ausgewählt, die physikalisch geeignet, verfügbar und/oder funktionstüchtig ist und ferner einen geringen Abstand zum Zielort 21 aufweist.

In einem ganz konkreten Beispiel bezugnehmend auf Fig. 2 sind die Sicherungseinrichtungen 4H und 4I Zielorten 21 in Form von Einfamilienhäusern zugeordnet. Die Sicherungseinrichtungen 4H und 4I befinden sich in räumlicher Nähe zueinander, vorzugsweise also in demselben räumlichen Gebiet, Bezirk, Postleitzahlenbereich o. dgl. Wenn eine Vorselektion von Sicherungseinrichtungen 4A bis 4H erfolgt, werden daher vorzugsweise mindestens die beiden Sicherungseinrichtungen 4H und 4I vorselektiert.

Wenn die Zentraleinrichtung 3 ein Reservierungssignal 9 erhält, erfolgen ein oder mehrere der Vergleiche wie zuvor beschrieben bevorzugt durch das Auswahlmodul 31 der Zentraleinrichtung 3. Im konkreten Beispiel stimmt der durch den Ortsanfrageindikator identifizierte Zielort 21 mit dem Standort der Sicherungseinrichtung 4H überein. Wenn die Sicherungseinrichtung 4H im konkreten Fall nicht verfügbar ist, nicht funktionsfähig ist und/oder keine entsprechende Berechtigung zur Sicherung des Packstücks 2 aufweist, wird die Sicherungseinrichtung 4H vorzugsweise dennoch verworfen. Wenn eine andere Sicherungseinrichtung 4A bis 4K, beispielsweise die Sicherungseinrichtung 4I des benachbarten Zielorts 21 verfügbar, funktionsfähig und mit einer entsprechenden Berechtigung ausgestattet ist, kann diese insbesondere aufgrund ihres geringen Abstands zum Zielort 21 ausgewählt werden. Besonders bevorzugt können also Nachbarn ihre Sicherungseinrichtung 4A bis 4K zur gegenseitigen Nutzung freigeben, insbesondere durch Konfiguration des Parameters bezüglich einer Berechtigung 28. Wenn die eigene Sicherungseinrichtung 4H dann nicht verfügbar ist, kann das Packstück 2 durch die Sicherungseinrichtung 4I des Nachbarn gesichert werden. Dies erlaubt in vorteilhafter Weise eine stets möglichst zielortnahe Zustellung und verbesserte Auslastung.

Die Zentraleinrichtung 3 bzw. das Auswahlmodul 31 ist vorzugsweise dazu ausgebildet, ein Reservierungsbestätigungssignal 38, 39 zu erzeugen, auszugeben und/oder zu übermitteln. Im Darstellungsbeispiel gemäß Fig. 1 wird das Reservierungsbestätigungssignal 38, 39, insbesondere an eine erste Identifikationseinrichtung 33, alternativ auch Empfangseinrichtung oder Sicherungsidentifikationseinrichtung genannt, über eine Datenverbindung 32 übermittelt.

Die erste Identifikationseinrichtung 33 kann der Reservierungseinrichtung 8 zugeordnet oder Teil dieser sein. Im Darstellungsbeispiel ist die erste Identifikationseinrichtung 33 unabhängig bzw. baulich getrennt von der Reservierungseinrichtung 8 realisiert. Dies hat den Vorteil, dass beispielsweise bei einem Paketdienst eine Zentrale die Reservierungseinrichtung 8 aufweisen oder bilden kann. Die erste Identifikationseinrichtung 33 ist vorzugsweise ein Endgerät, insbesondere mobiles Endgerät, eines Mitarbeiters, der mit einer Lieferung bzw. Abholung betraut ist. Die erste Identifikationseinrichtung 33 weist vorzugsweise eine Schnittstelle für die Verifikationseinrichtung 5A bis 5K der Sicherungseinrichtung 4A bis 4K auf. Hierdurch kann eine Sicherung bzw. Entsicherung des Packstücks 2 mit der ausgewählten Sicherungseinrichtung 4A bis 4K erfolgen.

Das Reservierungsbestätigungssignal 38, 39 weist vorzugsweise einen Zeitbestätigungsindikator 34 und/oder einen Ortsbestätigungsindikator 35 und/oder einen Sicherungsidentifikator 36 und/oder einen Entsicherungsidentifikator 37 auf.

Vorzugsweise ist die Zentraleinrichtung 3 dazu ausgebildet, auf das Reservierungssignal 9 mit dem Reservierungsbestätigungssignal 38, 39 zu antworten.

Das Reservierungsbestätigungssignal 38, 39 kann durch den Zeitbestätigungsindikator zur Identifikation eines Datum, einer Zeit und/oder eines Zeitraums, zu dem oder über den das Packstück 2 mit der zugeordneten Sicherungseinrichtung 4A bis 4K sicherbar ist, und/oder den Ortsbestätigungsindikator zur Identifikation eines Standorts der zugeordneten Sicherungseinrichtung 4A bis 4K aufweisen. In vorteilhafter Weise wird durch Übermittlung dieser Informationen ein von dem Zielort 21 abweichender Standort der zugeordneten Sicherungseinrichtung 4A bis 4K und/oder eine von dem Zeitreservierungsindikator 16 abweichender Zeitraum signalisiert. Das Reservierungsbestätigungssignal 38, 39 kann jedoch alternativ oder zusätzlich auch ohne den Zeitbestätigungsindikator 34 und/oder ohne den Ortsbestätigungsindikator 35 realisiert und/oder übermittelt werden, insbesondere wenn diesbezüglich keine Abweichungen vom Zielort 21 oder des durch den Zeitreservierungsindikator 16 identifizierten Zeitraums vorliegt.

Das Reservierungsbestätigungssignal 38, 39 weist vorzugsweise zumindest einen Sicherungsidentifikator 36 und/oder Entsicherungsidentifikator 37 auf. Ganz besonders bevorzugt weist ein Reservierungsbestätigungssignal 38, 39 lediglich entweder den Sicherungsidentifikator 36 oder den Entsicherungsidentifikator 37 auf. Das System, insbesondere die Zentraleinrichtung 3, kann dazu ausgebildet sein, ein erstes Reservierungsbestätigungssignal 38 mit dem Sicherungsidentifikator 36 und ein zweites Reservierungsbestätigungssignal 39 mit dem Entsicherungsidentifikator an unterschiedliche Identifikationseinrichtungen 33, 40, auch Empfangseinrichtungen genannt, zu übermitteln oder auf sonstige Weise an unterschiedliche Identifikationseinrichtungen 33, 40 auszugeben.

Der Sicherungsidentifikator 36 bzw. Entsicherungsidentifikator 37 und/oder das Sicherungsverifikationsmittel 14 bzw. Entsicherungsverifikationsmittel 15 ist vorzugsweise eine einmalige Kennung, Zufallsfolge, Bitfolge, ein Schlüssel oder ein sonstiges Verifikationsmittel, das vorzugsweise dazu ausgebildet ist, mit der Sicherungseinrichtung 4A bis 4K eine Verifikation zu ermöglichen. Die Verifikation mit dem Sicherungsidentifikator 36 und/oder dem Sicherungsverifikationsmittel 14 kann einen Sicherungsprozess bzw. mit dem Entsicherungsidentifkator 37 und/oder dem Entsicherungsverifikationsmittel 15 eine Entsicherung mit der ausgewählten Sicherungseinrichtung 4A bis 4K ermöglichen oder initiieren.

In einem konkreten Beispiel wird das erste Reservierungsbestätigungssignal 38 mit dem Sicherungsidentifikator 36 an die Reservierungseinrichtung 8 oder an die der Reservierungseinrichtung 8 zugeordnete erste Identifikationseinrichtung 33 übermittelt.

Der Sicherungsidentifikator 36 ist vorzugsweise dazu ausgebildet, mit der ausgewählten Sicherungseinrichtung 4A bis 4K eine Verifikation und hierdurch eine Sicherung des Packstücks 2 zu ermöglichen.

Im Fall einer Zustellung eines Packstücks 2 reserviert der Paketdienst eine der Sicherungseinrichtungen 4A bis 4K, sendet hierzu vorzugsweise das Reservierungssignal 9 an die Zentraleinrichtung 3 und erhält von der Zentraleinrichtung 3 den Sicherungsidentifikator 36 zurück, mit dem das Packstück 2 sicherbar ist.

Im Fall eines Versands des Packstücks 2 sendet der Versender das Reservierungssignal 9 an die Zentraleinrichtung 3 und erhält das Reservierungsbestätigungssignal 38, 39 mit dem Sicherungsidentifikator 36 zurück, um das Packstück 2 für eine Abholung in der zugeordneten Sicherungseinrichtung 4A bis 4K hinterlegen zu können.

Der Entsicherungsidentifikator 37 bzw. das Reservierungsbestätigungssignal 39 mit dem Entsicherungsidentifikator 37 wird vorzugsweise an eine von der Reservierungseinrichtung 9 und/oder dieser zugeordneten ersten Identifikationseinrichtung 33 unabhängige bzw. unterschiedliche zweiten Identifikationseinrichtung 40 übermittelt.

Vorzugsweise wird eine Identifikation oder Adressierung der unabhängigen zweiten Identifikationseinrichtung 40 durch das Buchungssignal 12 an die Zentraleinrichtung 3 übermittelt. Hierbei kann es sich um den Ortsanfrageindikator 20 oder eine sonstige Angabe, vorzugsweise eine Telefonnummer, E-Mail Adresse o. dgl. handeln.

Die unabhängige bzw. unterschiedliche zweite Identifikationseinrichtung 40, auch Empfangseinrichtung oder Entsicherungsidentifikationseinrichtung genannt, ist vorzugsweise ein Endgerät eines Empfängers für das Packstück 2. Die zweite Identifikationseinrichtung 40 ist vorzugsweise dazu ausgebildet, mit dem Entsicherungsidentifikator 37 eine Verifikation durch die ausgewählte Sicherungseinrichtung 4A bis 4K zu ermöglichen. Hierzu kann die zweite Identifikationseinrichtung 40 ein Anzeigegerät, insbesondere ein Display, eine Schnittstelle, insbesondere eine Funkschnittstelle, NFC-Schnittstelle o. dgl., einen Drucker oder ein sonstiges Mittel zur Ausgabe des Entsicherungsidentifikators 37 zur Verifikation mit der ausgewählten Sicherungseinrichtung 4A bis 4K aufweisen. Entsprechendes gilt auch für die erste Identifikationseinrichtung 33, wobei hier der Sicherungsidentifikator 36 ausgegeben, angezeigt, ausgedruckt oder auf sonstige Weise so ausgegeben oder übermittelt wird, so dass eine Verifikation mit der ausgewählten Sicherungseinrichtung 4A bis 4K ermöglicht wird.

Der Entsicherungsidentifikator 37 ist vorzugsweise dazu ausgebildet, mit der ausgewählten Sicherungseinrichtung 4A bis 4K eine Verifikation und hierdurch eine Entsicherung des Packstücks 2 zu ermöglichen.

Im Fall einer Zustellung eines Packstücks 2 hat ein Paketdienst das Packstück 2 in einer der Sicherungseinrichtung 4A bis 4K hinterlegt, insbesondere mittels des Sicherungsidentifikators 36. Zum Empfang, zur Entnahme bzw. zur Entsicherung des Packstücks 2 ist es bevorzugt, dass, insbesondere mit der zweiten Identifikationseinrichtung 40, der Entsicherungsidentifikator 37 an die Verifikationseinrichtung 5A bis 5K übermittelt wird, wodurch das Packstück 2 entsicherbar ist.

Im Fall, dass ein Packstück 2 mittels der Sicherungseinrichtung 4A bis 4K versendet werden soll, hat ein Versender, vorzugsweise mit dem Sicherungsidentifikator 36, ein Packstück 2 in der ausgewählten Sicherungseinrichtung 4A bis 4K hinterlegt. In diesem Fall nutzt der Paketdienst o. dgl. die zweite Identifikationseinrichtung 40 bzw. den Entsicherungsidentifikator 37. Vorzugsweise wird der Entsicherungsidentifikator 37 an die Verifikationseinrichtung 5A bis 5K der ausgewählten Sicherungseinrichtung 4A bis 4K übermittelt, worauf hin die ausgewählte Sicherungseinrichtung 4A bis 4K das Packstück 2, insbesondere zum Versand, freigibt.

Die Reservierungseinrichtung 8 weist vorzugsweise ein Eingabegerät 41 zur Eingabe einer oder mehrerer der Reservierungsinformationen 11 auf. Hierbei kann es sich um eine Tastatur 41 und/oder einen Scanner 42 oder ein sonstiges Eingabe- bzw. Einlesegerät handeln. Es sind jedoch auch andere Lösungen möglich. Gemäß einem weiteren, auch unabhängig realisierbaren Aspekt der vorliegenden Erfindung weisen eine oder mehrere der Sicherungseinrichtungen 4A bis 4K eine Funkschnittstelle 43, vorzugsweise eine standardisierte WLAN-Schnittstelle auf. Ferner ist bevorzugt, dass die jeweilige Sicherungseinrichtung 4A bis 4K dazu ausgebildet ist, datentechnisch in ein Funknetzwerk integriert zu werden.

Fig. 3 zeigt die Sicherungseinrichtung 4K mit einer Funkschnittstelle 43, insbesondere mit einem WLAN-Modul. Die Funkschnittstelle 43 ist vorzugsweise derart konfigurierbar, dass über einen Empfänger 44, vorzugsweise einen Accesspoint oder Router, die Datenverbindung 6 ermöglicht oder aufgebaut werden kann.

Die datentechnische Anbindung der Sicherungseinrichtungen 4A bis 4K über die Funkschnittstelle 43 bietet den Vorteil, dass keine zusätzliche Infrastruktur für die Datenverbindung 6 benötigt wird, da beispielsweise bereits am Zielort 21 vorhandene Empfänger 44 verwendet werden können. Dies ermöglicht eine kostengünstige, einfache und unkomplizierte Realisierung der Datenverbindung 6.

Die Sicherungseinrichtungen 4A bis 4K werden vorzugsweise mit einem Netzstromadapter 45 über das Stromnetz mit Energie versorgt. Alternativ oder zusätzlich können jedoch auch Solarzellen oder sonstige Mittel zur Energieversorgung verwendet werden. Auch ein Akku bzw. Batteriebetrieb ist möglich.

Die Sicherungseinrichtungen 4A bis 4K, zumindest jedoch solche mit einer Funkschnittstelle 43, weisen vorzugsweise eine Konfigurationsschnittstelle 46 zur Konfiguration der Funkschnittstelle 43 auf. Hierdurch ist es möglich, die jeweilige Sicherungseinrichtung 4A bis 4K in ein zur Verfügung stehendes Funknetzwerk, insbesondere ein bestehendes WLAN, einzubuchen.

Die Funkschnittstelle 43 kann alternativ oder zusätzlich auch eine Verbindung zu Mobilfunknetzen o. dgl. herstellen. Die Konfigurationsschnittstelle 46 weist vorzugsweise ein Eingabegerät auf oder ist hiermit verbindbar. Insbesondere kann die Konfigurationsschnittstelle 46 ein Webinterface aufweisen. Die Konfigurationsschnittstelle 46 wird vorzugsweise durch ein Passwort und/oder durch einen vorzugsweise durch die Sicherungseinrichtung geschützten Schalter oder Taster vor unberechtigten Zugriffen geschützt. Die Konfigurationsschnittstelle 46 kann also einen bevorzugt durch die Sicherungseinrichtung oder auf sonstige Weise geschützten Schalter oder Taster aufweisen, um die Datenverbindung 6 aufzubauen oder zu ermöglichen.

Es kann vorgesehen sein, dass die Sicherungseinrichtungen 4A bis 4K einen Verriegelungsmechanismus 47 für eine Verschlusseinrichtung 48 zur Sicherung und/oder Entsicherung des Packstücks 2 aufweisen. Hier sind jedoch auch andere Lösungen möglich.

Die Zentraleinrichtung 3 ist vorzugsweise dazu ausgebildet, mehrere Sicherungseinrichtungen 4A bis 4K zentral zu steuern. Die Sicherungseinrichtungen 4A bis 4K und die Zentraleinrichtung 3 sind vorzugsweise baulich voneinander getrennt realisiert. Alternativ oder zusätzlich sind die Sicherungseinrichtungen 4A bis 4K und die Zentraleinrichtung 3 an unterschiedlichen Standorten angeordnet.

Die Sicherungseinrichtungen 4A bis 4K sind vorzugsweise dazu ausgebildet, nur nach Verifikation einer Berechtigung eine Sicherung bzw. Entsicherung zuzulassen, insbesondere eine Öffnung der Verschlusseinrichtung 48 bzw. Klappe zum Hinterlegen oder zum Entnehmen des Packstücks 2.

Das System 1 weist vorzugsweise ein, insbesondere zumindest im Wesentlichen sternförmiges, Netzwerk auf, wobei die Sicherungseinrichtungen 4A bis 4K jeweils datenmäßig mit der Zentraleinrichtung 3, bevorzugt jedoch nicht untereinander verbunden sind. Dies ermöglicht es, die Sicherungseinrichtungen 4A bis 4K durch die Zentraleinrichtung 3 zentral zu steuern und/oder zu verwalten.

In einem konkreten Beispiel weist das System 1 eine Vielzahl von Sicherungseinrichtungen 4A bis 4K in Form von Postempfangsbehältern auf, die datenmäßig mit der Zentraleinrichtung 3 verbunden und von der Zentraleinrichtung 3 steuerbar sind. Die Zentraleinrichtung 3 ermöglicht es dann, auf Basis der Reservierungsinformationen eine geeignete Sicherungseinrichtung 4A bis 4K zu identifizieren und auszuwählen. Vorzugsweise erzeugt die Zentraleinrichtung 3 eine Zuordnung zwischen dem Reservierungssignal 9 und der auszuwählen Sicherungseinrichtung 4A bis 4K. Die auszuwählen Sicherungseinrichtung 4A bis 4K in Form des Postempfangsbehälters wird dann durch die Zentraleinrichtung 3 so gesteuert, dass das Packstück 2 in der auszuwählen Sicherungseinrichtung 4A bis 4K hinterlegt werden kann.

Die vorliegende Erfindung bietet in vorteilhafter Weise einen anbieterunabhängigen Zugriff auf die Sicherungseinrichtungen 4A bis 4K.

Vorzugsweise werden anbieterneutrale Sicherungseinrichtungen 4A bis 4K durch die Zentraleinrichtung 3 zentral gesteuert, verwaltet und zugeordnet. Dies ermöglicht es, mehreren unterschiedlichen Dienstleistern Zugriff auf dieselbe Sicherungseinrichtung 4A bis 4K zu unterschiedlichen, dynamisch verwalteten Zeiten zu ermöglichen. Folglich werden Materialaufwand und Kosten im Zusammenhang mit mehreren Sicherungseinrichtungen 4A bis 4K für einzelne Anbieter vermieden.

Gemäß einem auch unabhängig realisierbaren Aspekt der vorliegenden Erfindung korrespondiert der Packstückparameter 17 zu einer Haltbarkeit bzw. zu einem Lagertemperaturbereich bzw. zu einer Kühlpflichtigkeit. Der Sicherungseinrichtungsparameter 22 kann zu einem Kühlstatus oder einer Kühlfunktion oder einer thermischen Isolierung und/oder aktiven Temperierung, insbesondere Kühlung, der Sicherungseinrichtung 4A bis 4K korrespondieren. Vorzugsweise identifiziert die Zentraleinrichtung 3, ob der Packstückparameter 17 zu einer Lagertemperatur, einem Lagertemperaturbereich und/oder einer Kühlpflichtigkeit des Packstücks 2 korrespondiert und vergleicht den Packstückparameter 17 mit dem Sicherungseinrichtungsparameter 22 hinsichtlich eines Kühlstatus oder einer Kühlfunktion der Sicherungseinrichtung 4A bis 4K, vorzugsweise nur in diesem Fall.

Vorzugsweise werden solche Sicherungseinrichtungen 4A bis 4K selektiert, mit denen das Packstück 2 sicherbar ist, insbesondere solche Sicherungseinrichtungen 4A bis 4K, bei denen die Abmessungen des zu sichernden Packstücks 2 geringer sind als die maximalen Abmessungen eines durch die jeweilige Sicherungseinrichtung 4A bis 4K sicherbaren Packstücks 2, die für ein Gewicht größer als das Gewicht des Packstücks 2 geeignet sind und/oder die eine Einhaltung des Temperaturbereichs ermöglichen, vorzugsweise gleichzeitig.

Gemäß einem weiteren auch unabhängig realisierbaren Aspekt der vorliegenden Erfindung werden solche Sicherungseinrichtungen 4A bis 4K selektiert, die einen vorbestimmten bzw. mit dem Reservierungssignal 9 übermittelten Maximalabstand unterschreiten. Mit dem Reservierungssignal 9 kann also ein Maximalabstand an die Zentraleinrichtung übermittelt werden, woraufhin vorzugsweise solche Sicherungseinrichtungen 4A bis 4K selektiert, auswählt oder markiert werden, die den Maximalabstand unterschreiten. Alternativ oder zusätzlich werden solche Sicherungseinrichtungen 4A bis 4K verworfen, die einen vorgegebenen und/oder mittels des Reservierungssignals 9 übermittelten Maximalabstand überschreiten.

In einem weiteren auch unabhängig realisierbaren Aspekt der vorliegenden Erfindung werden solche Sicherungseinrichtungen 4A bis 4K selektiert oder markiert, bei denen der Vergleich des Packstückparameters 17 mit dem Sicherungseinrichtungsparameter 22 und bei denen zusätzlich der Vergleich des Berechtigungsidentifikators 18 mit dem Sicherungseinrichtungsparameter 22 zu einer Selektion geführt hat.

Alternativ oder zusätzlich werden solche Sicherungseinrichtungen 4A bis 4K selektiert oder markiert, bei denen der Vergleich des Packstückparameters 17 mit dem Sicherungseinrichtungsparameter 22 und zusätzlich der Vergleich des Zeitanfrageindikators 19 mit dem Sicherungseinrichtungsparameter 22 zu einer Selektion der Sicherungseinrichtung 4A bis 4K geführt hat.

Alternativ oder zusätzlich werden solche Sicherungseinrichtungen 4A bis 4K selektiert, bei denen der Vergleich des Packstückparameters 17 mit dem Sicherungseinrichtungsparameter 22 und der Vergleich des Ortsanfrageindikators 20 mit dem Sicherungseinrichtungsparameter 22 jeweils zu einer Selektion der Sicherungseinrichtung 4A bis 4K geführt hat.

Alternativ oder zusätzlich werden solche Sicherungseinrichtungen 4A bis 4K selektiert, bei denen der Vergleich des Berechtigungsidentifikators 18 mit dem Sicherungseinrichtungsparameter 22 und der Vergleich des Zeitanfrageindikators mit dem Sicherungseinrichtungsparameter 22 jeweils zu einer Selektion geführt hat.

Alternativ oder zusätzlich werden solche Sicherungseinrichtungen 4A bis 4K selektiert oder markiert, bei denen der Vergleich des Berechtigungsidentifikators 18 mit dem Sicherungseinrichtungsparameters 22 und der Vergleich des Ortsanfrageindikators 20 mit dem Sicherungseinrichtungsparameter 22 jeweils zu einer Selektion der Sicherungseinrichtung 4A bis 4K geführt hat.

Alternativ oder zusätzlich werden solche Sicherungseinrichtungen 4A bis 4K selektiert oder markiert, bei denen der Vergleich des Zeitanfrageindikators 19 mit Sicherungseinrichtungsparameter 22 und der Vergleich des Ortsanfrageindikators 20 mit dem Sicherungseinrichtungsparameter 22 jeweils zu einer Selektion der Sicherungseinrichtung 4A bis 4K geführt hat.

Besonders bevorzugt werden solche Sicherungseinrichtungen 4A bis 4K markiert und/oder selektiert, bei denen der Vergleich des Packstückparameters 17 mit dem Sicherungseinrichtungsparameter 22, ein Vergleich des Berechtigungsidentifikators 18 mit dem Sicherungseinrichtungsparameter 22 und der Vergleich des Zeitanfrageindikators 19 mit dem Sicherungseinrichtungsparameter 22 jeweils zu einer Selektion der Sicherungseinrichtung 4A bis 4K geführt hat.

Weiter besonders bevorzugt werden solche Sicherungseinrichtungen 4A bis 4K selektiert und/oder markiert, bei denen ein Vergleich des Berechtigungsidentifikators 18 mit dem Sicherungseinrichtungsparameter 22, ein Vergleich des Zeitanfrageindikators 19 mit dem Sicherungseinrichtungsparameter 22 und ein Vergleich des Ortsanfrageindikators mit dem Sicherungseinrichtungsparameter 22 jeweils zu einer Selektion der Sicherungseinrichtung 4A bis 4K geführt hat.

Weiter besonders bevorzugt werden solche Sicherungseinrichtungen 4A bis 4K selektiert und/oder markiert, bei denen der Vergleich des Packstückparameters 17 mit dem Sicherungseinrichtungsparameter 22, der Vergleich des Zeitanfrageindikators 19 mit dem Sicherungseinrichtungsparameter 22 und der Vergleich des Ortsanfrageindikators 20 mit dem Sicherungseinrichtungsparameter 22 jeweils zu einer Selektion der Sicherungseinrichtung 4A bis 4K geführt hat.

Weiter besonders bevorzugt werden solche Sicherungseinrichtungen 4A bis 4K selektiert und/oder markiert, bei denen der Vergleich des Packstückparameters 17 mit dem Sicherungseinrichtungsparameter 22, der Vergleich des Berechtigungsidentifikators 18 mit dem Sicherungseinrichtungsparameter 22 und der Vergleich des Ortsanfrageindikators 19 mit dem Sicherungseinrichtungsparameter 22 jeweils zu einer Selektion der Sicherungseinrichtung 4A bis 4K geführt hat.

Ganz besonders bevorzugt werden solche Sicherungseinrichtungen 4A bis 4K selektiert und/oder markiert, bei denen der Vergleich des Packstückparameters 17 mit dem Sicherungseinrichtungsparameter 22, der Vergleich des Berechtigungsidentifikators 18 mit dem Sicherungseinrichtungsparameter 22, der Vergleich des Zeitanfrageindikators 19 mit dem Sicherungseinrichtungsparameter 22 und/oder der Vergleich des Ortsanfrageindikators 20 mit dem Sicherungseinrichtungsparameter 22 jeweils zu einer Selektion der Sicherungseinrichtung 4A bis 4K geführt hat.

Die Selektion bzw. Markierung der jeweiligen Sicherungseinrichtung 4A bis 4K kann durch Auswahl eines zu der jeweiligen Sicherungseinrichtung 4A bis 4K korrespondierenden Eintrags einer Sicherungseinrichtungsdatenbank 23 erfolgen. Alternativ oder zusätzlich können selektierte und/oder markierte Sicherungseinrichtungen 4A bis 4K zusammengestellt werden, beispielsweise in einer Liste, einer Tabelle, einer Datenbank, einem Datenbankauszug o. dgl.

Eine Selektion bzw. Markierung einer Sicherungseinrichtung 4A bis 4K erfolgt besonders bevorzugt durch Selektion oder Markierung eines zu der jeweiligen Sicherungseinrichtung 4A bis 4K korrespondierenden Sicherungseinrichtungsidentifikators, der eineindeutig zu einer bestimmten Sicherungseinrichtung 4A bis 4K korrespondiert. Der Sicherungseinrichtungsparameter 22 kann den Sicherungseinrichtungsidentifikator aufweisen oder umgekehrt.

Gemäß einem weiteren auch unabhängig realisierbaren Aspekt der vorliegenden Erfindung wird unter den selektierten Sicherungseinrichtungen 4A bis 4K diejenige Sicherungseinrichtung 4A bis 4K ausgewählt, die auf Basis des Vergleichs des Ortsanfrageindikators 20 mit dem Sicherungseinrichtungsparameter 22 ermittelten geringsten Abstand aufweist. Insbesondere wird also diejenige Sicherungseinrichtung 4A bis 4K ausgewählt, die als Ergebnis eines Vergleichs des Reservierungssignals 9 oder einer bzw. mehrerer Bestandteile des Reservierungssignals 9 mit dem Sicherungseinrichtungsparameter 22 zur Sicherung des Packstücks 2 geeignet ist und, vorzugsweise, den geringsten Abstand zu dem mit dem Reservierungssignal 9 übermittelten Zielort 21 zur Sicherung des Packstücks 2 aufweist.

Gemäß einem weiteren, auch unabhängig realisierbaren Aspekt der vorliegenden Erfindung ist vorgesehen, dass die Zentraleinrichtung 3 die ausgewählte Sicherungseinrichtung 4A bis 4K zu dem Buchungssignal 12 zuordnet, wobei die auf diese Weise zugeordnete Sicherungseinrichtung 4A bis 4K insbesondere "zugeordnete bzw. ausgewählte Sicherungseinrichtung" genannt wird. Grundsätzlich ist es jedoch auch möglich, dass die "zugeordnete bzw. ausgewählte Sicherungseinrichtung" auf andere Weise zugeordnet, einer anderen Größe zugeordnet oder lediglich, besonders bevorzugt auf die zuvor erläuterte Weise, ausgewählt ist.

Gemäß einem weiteren, auch unabhängig realisierbaren Aspekt der vorliegenden Erfindung steuert die Zentraleinrichtung 3 die zugeordnete bzw. ausgewählte Sicherungseinrichtung 4A bis 4K, vorzugsweise mit dem Buchungssignal 12.

Es ist bevorzugt, dass die Zentraleinrichtung 3 der zugeordneten Sicherungseinrichtung 4A bis 4K das Buchungssignal 12 aufweisend ein Sicherungsverifikationsmittel 14 zur Verifikation eines zur Sicherung des Packstücks 2 berechtigten Nutzers sendet und/oder aufweisend ein Entsicherungsverifikationsmittel 15 zur Verifikation eines zur Entsicherung des Packstücks 2 berechtigten Nutzers sendet und/oder aufweisend ein Zeitreservierungsindikator 16 zur Identifikation eines Zeitraums, in dem das Packstück 2 mit der Sicherungseinrichtung 4A bis 4K gesichert werden soll, sendet. Hierdurch kann in vorteilhafter Weise die zugeordnete bzw. ausgewählte Sicherungseinrichtung 4A bis 4K derart gesteuert werden, dass zu dem Zeitraum, zu dem das Packstück 2 mit der zugeordneten Sicherungseinrichtung 4A bis 4K gesichert werden soll, ein zur Sicherung des Packstücks 2 berechtigter Nutzer, beispielsweise ein Paketdienstmitarbeiter, nach Verifikation seiner Berechtigung das Packstück 2 mit der zugeordneten Sicherungseinrichtung 4A bis 4K sichern kann.

Alternativ oder zusätzlich ermöglicht die Erfindung in vorteilhafter Weise, dass ein zur Entsicherung des Packstücks 2 berechtigter Nutzer, insbesondere Empfänger, nach Verifikation seiner Identität bzw. Berechtigung mit dem Entsicherungsverifikationsmittel 15 das Packstück entsichern und von der zugeordneten Sicherungseinrichtung 4A bis 4K entfernen kann. Gleichzeitig wird besonders bevorzugt verhindert, dass ein nicht zur Sicherung des Packstücks 2 berechtigter Nutzer ein Packstück 2 mit der Sicherungseinrichtung 4A bis 4K sichert.

Es ist bevorzugt, dass die jeweilige Sicherungseinrichtung 4A bis 4K bzw. die zugeordnete bzw. ausgewählte Sicherungseinrichtung 4A bis 4K dazu ausgebildet ist, eine Verifikation mittels des Entsicherungsverifikationsmittels 15 erst dann zu akzeptieren, wenn zuvor eine Verifikation mittels des Sicherungsverifkationsmittels 14 erfolgreich gewesen ist. In vorteilhafter Weise kann hierdurch vermieden werden, dass ein Zugriff auf die Sicherungseinrichtung 4A bis 4K in falscher Reihenfolge oder durch Unberechtigte erfolgt.

Insbesondere ist die jeweilige Sicherungseinrichtung 4A bis 4K dazu ausgebildet, in einer zeitlichen Abfolge, vorzugsweise während des durch den Zeitanfrageindikator 19 bzw. Zeitreservierungsindikator 16 identifizierten Zeitraums, erst nach Sicherung des Packstücks 2 eine Entsicherung zu ermöglichen, besonders bevorzugt mit dem Entsicherungsverifikationsmittel 15, vorzugsweise wobei erst nach Sicherung des Packstücks 2 unter Verifikation mit dem Sicherungsverifikationsmittel 14 eine Entsicherung des Packstücks 2 unter Verifikation mit dem Entsicherungsverifikationsmittel 15 erfolgt oder ermöglicht wird, vorzugsweise durch die Sicherungseinrichtung 4A bis 4K.

Gemäß einem weiteren, bevorzugten Aspekt der vorliegenden Erfindung sind das Sicherungsverifikationsmittel 14 und das Entsicherungsverifikationsmittel 15 unterschiedlich voneinander.

In einem konkreten Beispiel empfängt die zugeordnete bzw. ausgewählte Sicherungseinrichtung 4A bis 4K, vorzugsweise ein Postempfangsbehälter, mit einer Verschlusseinrichtung 48, wie einer Tür, Klappe o. dgl., und/oder einen von der Sicherungseinrichtung 4A bis 4K trennbaren Sicherungsbehälter, das Buchungssignal 12 und ist durch den Verschluss- bzw. Verriegelungsmechanismus 47 dazu ausgebildet, einen Innenraum nur nach Überprüfung einer Berechtigung bzw. nach Verifikation zu öffnen bzw. freizugeben. Hierzu ist es besonders bevorzugt, dass nur zu dem mittels des Zeitreservierungsindikators 16 übermittelten Zeitraums mit dem Sicherungsverifikationsmittel 14 und/oder dem Sicherungsidentifikator 36 eine Verifikation erfolgen kann. Wenn die Verifikation mittels des Sicherungsverifikationsmittels 14 und/oder dem Sicherungsidentifikator 36 innerhalb des durch den Zeitreservierungsindikators 16 identifizierten Zeitraums erfolgreich ist, insbesondere wenn die Sicherungseinrichtung 4A bis 4K bzw. die zugeordnete bzw. ausgewählte Sicherungseinrichtung 4A bis 4K mit ihrer Verifikationseinrichtung 5A bis 5K unter Verwendung des Sicherungsverifikationsmittels 14 und/oder des Sicherungsidentifikators 36 eine Berechtigung zur Sicherung des Packstücks 2 ergeben hat, ermöglicht die (zugeordnete) Sicherungseinrichtung 4A bis 4K eine Sicherung des Packstücks 2, insbesondere also die Öffnung der Verschlusseinrichtung 48, der Klappe und/oder der Tür.

Bis zur Sicherung des Packstücks 2 kann das Entsicherungsverifikationsmittel 15 durch die zugeordnete bzw. ausgewählte Sicherungseinrichtung 4A bis 4K gespeichert und/oder deaktiviert werden. Es ist also bevorzugt, dass das Entsicherungsverifikationsmittel 15 durch die zugeordnete bzw. ausgewählte Sicherungseinrichtung 4A bis 4K nicht zur Verifikation verwendet wird, bis ein Packstück 2 durch die zugeordnete bzw. ausgewählte Sicherungseinrichtung 4A bis 4K gesichert worden ist bzw. eine Verifikation mittels des Sicherungsverifikationsmittels 14 erfolgt ist.

Die Verwendung des Entsicherungsverifikationsmittels 15 kann durch die Verifikation mittels des Sicherungsverifikationsmittels 14 freigeschaltet werden. Es ist bevorzugt, dass nach einmaliger Verifikation mittels des Sicherungsverifikationsmittels 14 eine weitere Verifikation mittels des Sicherungsverifikationsmittels 14 durch die zugeordnete bzw. ausgewählte Sicherungseinrichtung 4A bis 4K verhindert wird und/oder eine Entsicherung mittels des Entsicherungsverifikationsmittels 15 ermöglicht wird. Zur Entsicherung mittels des Entsicherungsverifikationsmittels 15 erfolgt vorzugsweise eine Verifikation mit der Verifikationseinrichtung 5A bis 5K der zugeordneten Sicherungseinrichtung 4A bis 4K.

Gemäß einem weiteren Aspekt der vorliegenden Erfindung kann das Sicherungsverifikationsmittel 14 und/oder das Entsicherungsverifikationsmittel 15 in der Sicherungseinrichtung 4A bis 4K abgelegt oder abgespeichert sein. Es ist also nicht notwendig, dass das Entsicherungsverifikationsmittel 15 in jedem Fall mit dem Buchungssignal 12 oder unabhängig hiervon an die zugeordnete bzw. ausgewählte Sicherungseinrichtung 4A bis 4K übermittelt wird. Wenn beispielsweise eine Sicherungseinrichtung 4A bis 4K, insbesondere ein Postempfangsbehälter, lediglich einer bestimmten Person, einem bestimmten Haushalt o. dgl. zugeordnet ist, kann es ausreichen, wenn nur ein festes, vorbestimmtes Entsicherungsverifikationsmittel 15 verwendet wird. Dieses kann werkseitig vorgesehen oder bei der Installation eingerichtet werden.

Das Sicherungsverifikationsmittel 14 und/oder das Entsicherungsverifikationsmittel 15 werden vorzugsweise für jeden Sicherungs- bzw. Entsicherungsvorgang neu bzw. unterschiedlich generiert, vorzugsweise durch die Zentraleinrichtung 3. Alternativ oder zusätzlich ist es jedoch auch möglich, dass das Sicherungsverifikationsmittel 14, insbesondere in Abhängigkeit von dem Reservierungssignal 9 oder dem darin enthaltenen Informationen, ist. Insbesondere kann der Berechtigungsidentifikator 18 als Sicherungsverifikationsmittel 14 verwendet werden oder das Sicherungsverifikationsmittel 14 basiert auf dem Berechtigungsidentifikator 18.

Der Sicherungsidentifikator 36 ist vorzugsweise dazu ausgebildet, mit dem Sicherungsverifikationsmittel 14 und/oder der Verifikationseinrichtung 5A bis 5K der ausgewählten Sicherungseinrichtung 4A bis 4K eine Verifikation zur Sicherung des Packstücks 2 zu ermöglichen. Insbesondere ist vorgesehen, dass der Sicherungsidentifikator 36 mit der Verifikationseinrichtung 5A bis 5K eingelesen, eingegeben oder auf sonstige Weise der Sicherungseinrichtung zugeführt wird. Das Sicherungsverifikationsmittel 14 und der Sicherungsidentifikator 36 werden der ausgewählten Sicherungseinrichtung 4A bis 4K vorzugweise auf unterschiedliche Weise, über unterschiedliche Wege, unterschiedliche Datenverbindungen 6 und/oder über unterschiedliche Medien oder Datenübertragungsmedien zugeführt. Entsprechendes gilt alternativ oder zusätzlich für das Entsicherungsverifkationsmittel 15 und den Entsicherungsidentifikator 37.

Die Verifikation mit dem Sicherungsverifikationsmittel 14 und dem Sicherungsidentifikator 36 kann ein anderes Verfahren verwendet werden wie für die Verifikation mit dem Entsicherungsverifikationsmittel 15 und dem Entsicherungsidentifikator 37. Insbesondere ist es bevorzugt, dass das Sicherungsverifikationsmittel 14 und/oder der Sicherungsidentifikator 36 bei jedem neuen Sicherungsvorgang neu generiert werden und das Entsicherungsverifikationsmittel 16 und/oder der Entsicherungsidentifikator 37 unverändert bleiben/bleibt, oder umgekehrt. Hierdurch wird insbesondere eine Zustellung durch unterschiedliche Dienstleister ermöglicht, ohne dass der Empfänger seinen Entsicherungsidentifikator 37 regelmäßig aktualisieren muss. Im umgekehrten Fall kann der Eigentümer einer Sicherungseinrichtung 4A bis 4K mit dem gleichbleibenden Sicherungsverifikationsmittel 14 und/oder der Sicherungsidentifikator 36 ein Packstück 2 insbesondere zum Versand sichern, während die fallweise Neugenerierung des Entsicherungsidentifikators 16 und/oder des Entsicherungsidentifikators 37 eine Abholung durch Unberechtigte unterbinden kann.

Die Sicherungseinrichtung 4A bis 4K bzw. die Verifikationseinrichtung 5A bis 5K ist vorzugsweise dazu ausgebildet, den Sicherungsidentifikator 36 mit dem Sicherungsverifkationsmittel 14 zu vergleichen, zu verrechnen oder auf sonstige Weise zu ermitteln, ob der Sicherungsidentifikator 36 zu dem Sicherungsverifikationsmittel 14 korrespondiert. Wenn der Sicherungsidentifikator 36 mit dem Sicherungsverifikationsmittel 14 korrespondiert, ermöglicht die Sicherungseinrichtung 4A bis 4K vorzugsweise die Sicherung des Packstücks 2, insbesondere wobei die Sicherungseinrichtung 4A bis 4K eine Klappe oder Tür oder sonstige Verschlusseinrichtung 48 zur Sicherung des Packstücks 2 entriegelt oder öffnet und/oder einen von der Sicherungseinrichtung 4A bis 4K trennbaren Sicherungsbehälter freigibt.

Das Reservierungsbestätigungssignal 38, 39 weist alternativ oder zusätzlich den Entsicherungsidentifikator 37 auf. Es ist bevorzugt, dass dasselbe Reservierungsbestätigungssignal 38, 39 entweder den Sicherungsidentifikator 36 oder den Entsicherungsidentifikator 37 aufweist, nicht jedoch beide.

Es ist bevorzugt, dass der Entsicherungsidentifikator 37 zusammen mit dem Entsicherungsverifikationsmittel 15 und/oder der Verifikationseinrichtung 5A bis 5K eine Verifikation eines zur Entsicherung des Packstücks 2 berechtigten Nutzers ermöglicht. Insbesondere wird der Entsicherungsidentifikator 37 von der Verifikationseinrichtung 5A bis 5K eingelesen oder in diese eingegeben oder auf sonstige Weise der Verifikationseinrichtung zugeführt. Die Verifikationseinrichtung 5A bis 5K vergleicht oder verrechnet vorzugsweise den Entsicherungsidentifikator 37 mit dem Entsicherungsverifikationsmittel 15. Hierdurch wird vorzugsweise festgestellt, ob der Entsicherungsidentifikator 37 mit dem Entsicherungsverifikationsmittel 15 korrespondiert. Wenn der Entsicherungsidentifikator 37 mit dem Entsicherungsverifikationsmittel 15 korrespondiert, entsichert die zugeordnete bzw. ausgewählte Sicherungseinrichtung 4A bis 4K das Packstück 2, insbesondere wobei die Sicherungseinrichtung 4A bis 4K die Verschlusseinrichtung 48 entriegelt oder öffnet und/oder einen von der Sicherungseinrichtung 4A bis 4K trennbaren Sicherungsbehälter freigibt. Hierdurch wird eine Entnahme ermöglicht.

Die Zentraleinrichtung 3 erzeugt vorzugsweise zumindest ein erstes Reservierungsbestätigungssignal 38 mit dem Sicherungsidentifikator 36 und ohne den Entsicherungsidentifikator 37. Dieses Reservierungsbestätigungssignal 38 kann durch die Zentraleinrichtung 3 an die Reservierungseinrichtung 8 oder eine hierzu korrespondierende erste Identifikationseinrichtung 33 bzw. hierzu korrespondierendes Empfangsgerät, vorzugsweise mobiles Empfangsgerät, übermittelt werden. Hierdurch wird es einem Paketdienst ermöglicht, eine Sendung mittels der zugeordneten Sicherungseinrichtung 4A bis 4K zu sichern.

Alternativ oder zusätzlich ist die Zentraleinrichtung 3 dazu ausgebildet, ein zweites Reservierungsbestätigungssignal 39 mit dem Entsicherungsidentifikator 37 und ohne den Sicherungsidentifikator 36 zu erzeugen.

Es ist bevorzugt, dass das erste und das zweite Reservierungsbestätigungssignal 38, 39 an unterschiedliche, vorzugsweise gemäß der Reservierungsinformation 11 unterschiedlichen Sicherungs- und/oder Entsicherungsberechtigte zugeordneten, Empfangseinrichtungen bzw. Identifikationseinrichtungen 33, 40 zu senden.

In einem ersten konkreten Beispiel wird das erste Reservierungsbestätigungssignal 38 mit dem Sicherungsidentifikator 36 an eine erste Identifikationseinrichtung 33, beispielsweise eines Paketdiensts, gesendet. Der Paketdienst kann das Packstück 2 daraufhin unter Verwendung des Sicherungsidentifikators 36 mit der zugeordneten Sicherungseinrichtung 4A bis 4K sichern. Insbesondere öffnet der Paketdienstmitarbeiter mittels des Sicherungsidentifikators 36 die zugeordnete bzw. ausgewählte Sicherungseinrichtung 4A bis 4K in Form eines Postempfangsbehälters und hinterlegt in dem Postempfangsbehälter den Gegenstand bzw. das Packstück 2 oder Paket.

Das zweite Reservierungsbestätigungssignal 39 mit dem Entsicherungsidentifikator 37 wird vorzugsweise an eine Empfangseinrichtung bzw. zweite Identifikationseinrichtung 40, vorzugsweise eines Empfängers, gesendet, beispielsweise an ein Smartphone, Tablet o. dgl., bevorzugt nachdem die Sicherung des Packstücks 2 erfolgt ist.

Es ist bevorzugt, dass die Verifikationseinrichtung 5A bis 5K nach oder durch Verifikation mit dem Sicherungsidentifikator 36 eine Übermittlung des Entsicherungsidentifikators 37 bewirkt, bevorzugt durch die Zentraleinrichtung 3 und/oder durch Übermittlung eines Steuersignals an die Zentraleinrichtung 3.

Nachdem das Packstück 2 mit der zugeordneten Sicherungseinrichtung 4A bis 4K gesichert worden ist, kann der Empfänger mit seiner zweiten Identifikationseinrichtung 40 bzw. mit dem Entsicherungsidentifikator 37 eine Verifikation mit dem Entsicherungsverifikationsmittel 15 bzw. der Verifikationseinrichtung 5A bis 5K durchführen. Die zugeordnete bzw. ausgewählte Sicherungseinrichtung 4A bis 4K entsichert daraufhin das Packstück 2, vorzugsweise wobei eine Klappe oder Tür der zugeordneten Sicherungseinrichtung 4A bis 4K in Form des Postempfangsbehälters geöffnet wird und/oder der durch die Sicherungseinrichtung 4A bis 4K gehaltene Sicherungsbehälter freigegeben wird. Daraufhin kann das Packstück 2, insbesondere das Paket, entgegengenommen bzw. entnommen werden.

In einem weiteren konkreten Beispiel soll mit einer Sicherungseinrichtung 4A bis 4K ein Packstück 2 versendet werden. Hierzu kann das erste Reservierungsbestätigungssignal 38 an einen Versender bzw. eine erste Identifikationseinrichtung 33 und das zweite Reservierungsbestätigungssignal 39 an einen Paketdienst bzw. eine zweite Identifikationseinrichtung 40 verschickt werden. In dieser Variante bevorzugt, dass der Versender das Packstück 2 unter Verwendung des Sicherungsidentifikators 36 mit einer, insbesondere der zugeordneten Sicherungseinrichtung 4A bis 4K sichert und ein Paketdienstmitarbeiter das Packstück 2 unter Verwendung des Entsicherungsidentifikators 37 abholt. Hierzu erfolgt eine Verifikation mittels des Entsicherungsidentifikators 37.

Gemäß einem weiteren Aspekt der vorliegenden Erfindung wird das zweite Reservierungsbestätigungssignal 39 erst dann übermittelt, zugestellt oder ausgegeben, besonders bevorzugt durch die Zentraleinrichtung 3 und/oder die zugeordnete bzw. ausgewählte Sicherungseinrichtung 4A bis 4K, wenn mit dem Sicherungsidentifikator 36 und/oder dem Sicherungsverifikationsmittel 14 und/oder der Verifikationseinrichtung 5A bis 5K eine Verifikation bzw. Sicherung des Packstücks 2 erfolgt ist. Hierdurch kann ausgeschlossen werden, dass eine Entsicherung noch nicht möglich ist, da die Sicherung noch nicht erfolgt ist. Besonders bevorzugt ist die Sicherungseinrichtung 4A bis 4K bzw. zugeordnete bzw. ausgewählte Sicherungseinrichtung 4A bis 4K dazu ausgebildet, bei oder nach Verifikation mit dem Sicherungsidentifikator 36 bzw. Sicherungsidentifikationsmittel 14 (der erfolgreichen Verifikation) ein Bestätigungssignal an die Zentraleinrichtung 3 zu übermitteln, Das Bestätigungssignal weist vorzugsweise einen Identifikator der zugeordneten Sicherungseinrichtung 4A bis 4K auf. Die Zentraleinrichtung 3 kann daraufhin das (zweite) Reservierungsbestätigungssignal 39 mit dem Entsicherungsidentifikator 37 oder den Entsicherungsidentifikator 37 auch unabhängig von dem (zweiten) Reservierungsbestätigungssignal 39 übermitteln.

Es ist in vorteilhafter Weise möglich, unterschiedliche Sicherungseinrichtungen 4A bis 4K, insbesondere Postempfangsbehälter, zentral zu steuern und zu verwalten. Hierdurch wird es möglich, die Postempfangsbehälter anbieterunabhängig zu nutzen. Beispielsweise ist es möglich, dass zu einem ersten Zeitpunkt bzw. Zeitraum ein erster Anbieter einen Postempfangsbehälter belegt und zu einem anderen, zweiten Zeitraum, ein anderer Anbieter.

Gemäß einem weiteren, auch unabhängig realisierbaren Aspekt der vorliegenden Erfindung weisen eine oder mehrere der Sicherungseinrichtungen 4A bis 4K (jeweils) einen Sensor 49 zur Ermittlung, ob ein Packstück 2 mit der jeweiligen Sicherungseinrichtung 4A bis 4K gesichert ist, auf.

Die Zentraleinrichtung 3 ist vorzugsweise dazu ausgebildet ist, einen Sicherungseinrichtungsparameter 22 korrespondierend zu einer Eigenschaft einer Sicherungseinrichtung 4A bis 4K zu empfangen und/oder von der/den Sicherungseinrichtung/-en 4A bis 4K abzurufen und/oder in einer/der Sicherungseinrichtungsdatenbank 23 abzulegen, der zu dem Sensorsignal des Sensors 49 zur Ermittlung, ob ein Packstück 2 mit der jeweiligen Sicherungseinrichtung 4A bis 4K gesichert ist, bzw. zu einem Sicherungszustand der jeweiligen Sicherungseinrichtung 4A bis 4K korrespondiert. Hierdurch kann in vorteilhafter Weise eine unbeabsichtigte Mehrfachbelegung vermieden werden.

Es ist bevorzugt, dass die Zentraleinrichtung 3 dazu ausgebildet ist, ausgehend von dem jeweiligen Sicherungseinrichtungsparameter 22 eine Mehrfachbelegung zu verhindern. Der Einsatz des Sensors 49 führt hierbei zu Redundanz und der Möglichkeit, die Mehrfachbelegung auch bei Ausfall der Datenverbindung 6 zu ermöglichen.

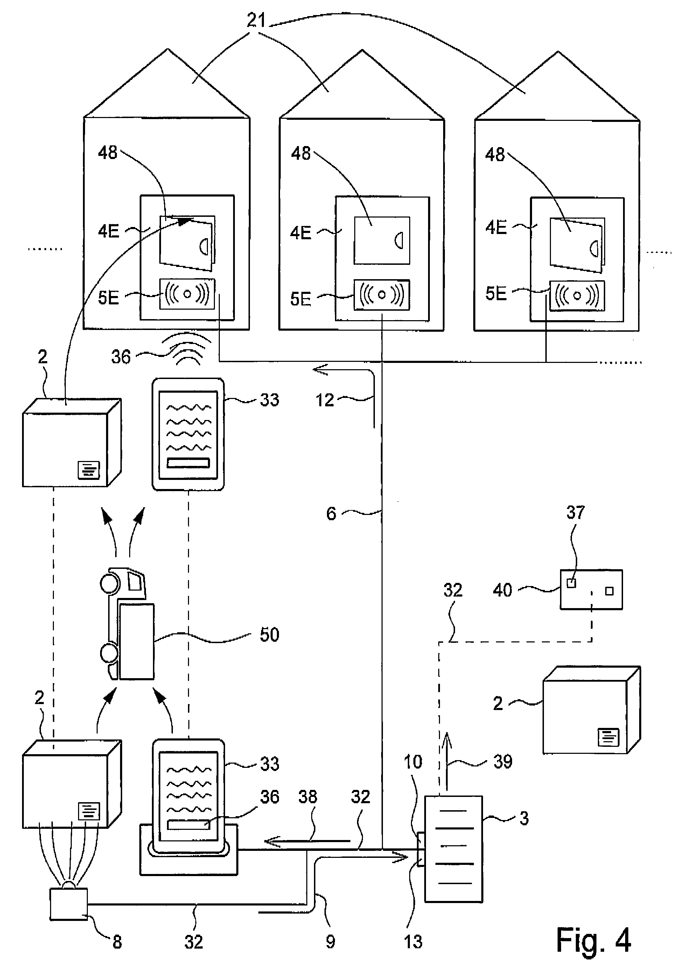

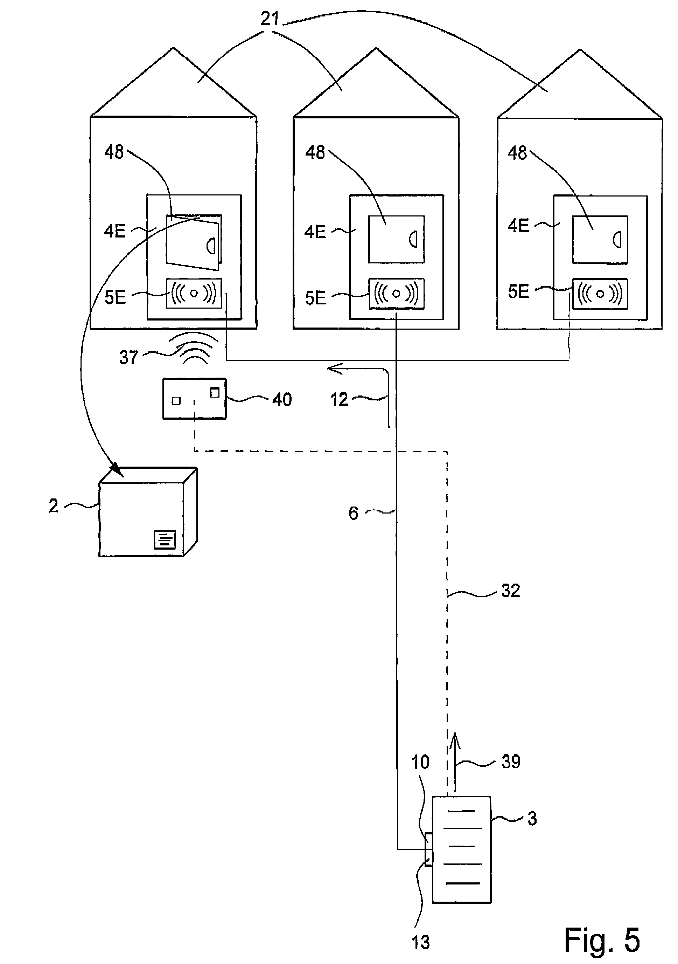

Fig. 4 und Fig. 5 zeigen vereinfachte, schematische Ansichten des vorschlagsgemäßen Systems 1 bei Sicherung und Entsicherung des Packstücks 2, anhand derer im Folgenden ein besonders bevorzugtes Sicherungs- und/oder Entsicherungsverfahren näher erläutert wird.

Mit der Reservierungseinrichtung 8 wird vorzugsweise ein Packstück 2 erfasst. Insbesondere erfasst die Reservierungseinrichtung 8 bevorzugt automatisch einen oder mehrere der Packstückparameter 17. Ferner erfasst oder ermittelt und/oder liest die Reservierungseinrichtung 8 aus einem Speicher aus oder berechnet die Reservierungseinrichtung 8 vorzugsweise den Berechtigungsidentifikator 18 und/oder den Zeitanfrageindikator 19 und/oder den Ortsanfrageindikator 20.

Die Reservierungseinrichtung 8 übermittelt vorzugsweise das Reservierungssignal 9, vorzugsweise mit dem Packstückparameter 17 und/oder dem Berechtigungsidentifikator 18 und/oder dem Zeitanfrageindikator 19 und/oder dem Ortsanfrageindikator 20, an die Zentraleinrichtung 3.

Die Zentraleinrichtung 3 ermittelt vorzugsweise mit dem Reservierungssignal 9 und/oder dem Packstückparameter 17 und/oder dem Berechtigungsidentifikator 18 und/oder dem Zeitanfrageindikator 19 und/oder dem Ortsanfrageindikator 20 eine zur Sicherung des zu dem Reservierungssignal 9 korrespondierenden Packstücks 2 geeignete der Sicherungseinrichtungen 4A bis 4K, im Darstellungsbeispiel gemäß Fig. 4 eine der Sicherungseinrichtungen 4E, im Folgenden zugeordnete bzw. ausgewählte Sicherungseinrichtung 4E genannt.

Die Zentraleinrichtung 3 übermittelt an die zugeordnete bzw. ausgewählte Sicherungseinrichtung 4A bis 4K vorzugsweise das Buchungssignal 12, insbesondere mit dem Sicherungsverifikationsmittel 14 und/oder dem Entsicherungsverifikationsmittel 15 und/oder dem Zeitreservierungsindikator 16.

Alternativ oder zusätzlich übermittelt die Zentraleinrichtung 3 das Buchungssignal 12, insbesondere das Sicherungsverifikationsmittel 14 und/oder Entsicherungsverifikationsmittel 15, an die Verifikationseinrichtung 5A bis 6K, im Darstellungsbeispiel die Verifikationseinrichtung 5E, der zugeordneten bzw. ausgewählten Sicherungseinrichtung 4A bis 4K.

Im Darstellungsbeispiel gemäß Fig. 4 und 5 empfängt die zugeordnete bzw. ausgewählte Sicherungseinrichtung 4E und/oder die Verifikationseinrichtung 5E der zugeordneten bzw. ausgewählten Sicherungseinrichtung 4E das Buchungssignal 12.

Die Zentraleinrichtung 3 übermittelt vorzugsweise ein Reservierungsbestätigungssignal 38, vorzugsweise aufweisend den Sicherungsidentifikator 36, an eine erste Identifikationseinrichtung 33, im Darstellungsbeispiel ein Smartphone.

Der Sicherungsidentifikator 36 wird vorzugsweise von der ersten Identifikationseinrichtung 33 empfangen und/oder in der ersten Identifikationseinrichtung 33 gespeichert, abgelegt und/oder zum Auslesen bereitgestellt.

Die erste Identifikationseinrichtung 33 ist vorzugsweise portabel, batteriebetrieben, akkubetrieben, passiv oder auf sonstige Weise netzunabhängig und/oder dazu ausgebildet, gemeinsam mit dem Packstück 2, parallel mit dem Packstück 2, auf dem Packstück 2 und/oder verbunden mit dem Packstück 2 transportiert zu werden, wie im Darstellungsbeispiel gemäß Fig. 4 mit einem Lieferwagen 50 eines Paketdienstes.

Die erste Identifikationseinrichtung 33 kann alternativ oder zusätzlich auch Klebeetikett, ein Tag, RFID-Tag, NFC-Tag, Barcode o. dgl. verbunden oder verbindbar mit dem Packstück 2 sein oder aufweisen.

Die erste Identifikationseinrichtung 33 und/oder das Packstück 2 sind vorzugsweise transportabel oder werden zu der zugeordneten Empfangseinrichtung 4E transportiert.

Zum Sichern des Packstücks 2 wird der Sicherungsidentifikator 36 vorzugsweise an die Verifikationseinrichtung 5E übermittelt und/oder von der Identifikationseinrichtung 33, bevorzugt durch die Verifikationseinrichtung 5E, abgerufen.

Die Verifikationseinrichtung 5E weist vorzugsweise ferner das insbesondere von der Zentraleinrichtung 3 übermittelte und/oder von der Zentraleinrichtung 3 empfangene Sicherungsverifikationsmittel 14 auf.

Die Verifikationseinrichtung 5E gleicht vorzugsweise das Sicherungsverifikationsmittel 14 mit dem Sicherungsidentifikator 36 ab und stellt fest, ob diese zueinander korrespondieren. Falls der Sicherungsidentifikator 36 für die ausgewählte Sicherungseinrichtung 4E mit dem Sicherungsverifikationsmittel 14 der zugeordneten Sicherungseinrichtung 4E korrespondiert, und, alternativ oder zusätzlich, der Zeitbestätigungsindikator 34 mit der aktuellen Ortszeit der ausgewählten Sicherungseinrichtung 4E und/oder mit dem Zeitreservierungsindikator 16 korrespondiert, kann die Verifikationseinrichtung 5E die zugeordnete bzw. ausgewählte Sicherungseinrichtung 4K derart steuern, dass das Packstück 2 mit der zugeordneten bzw. ausgewählten Sicherungseinrichtung 4K sicherbar ist.

Es ist weiter bevorzugt, dass die Zentraleinrichtung 3 ein Reservierungsbestätigungssignal 39, vorzugsweise mit dem Entsicherungsidentifikafior 37, an eine zweite Identifikationseinrichtung 40 übermittelt. Alternativ oder zusätzlich stellt die Zentraleinrichtung 3 sicher, dass das an die Sicherungseinrichtung 4E übermittelte Entsicherungsverifikationsmittel 15 zu dem Entsicherungsidentifikator 37 korrespondiert. Der Entsicherungsidentifikator 37 ist vorzugsweise einer zweiten Identifkationseinrichtung 40 zugeordnet. Die zweite Identifikationseinrichtung 40 ist vorzugsweise zur Entsicherung des Packstücks 2 ausgebildet. Aus Gründen der Übersichtlichkeit wird die Entnahme anhand Fig. 5 erläutert.

Zum Entsichern eines Packstücks 2 ist es bevorzugt, dass mit der zweiten Identifikationseinrichtung 40, vorliegend insbesondere eine Karte mit NFC- oder RFID-Funktionalität, der Entsicherungsidentifikator 37 an die Verifikationseinrichtung 5E der zugeordneten Sicherungseinrichtung 4E übermittelt wird. Alternativ oder zusätzlich kann die Verifikationseinrichtung 5E den Entsicherungsidentifikator 37 von der zweiten Identifikationseinrichtung 40 abrufen.

Die Verifikationseinrichtung 5E weist vorzugsweise das Entsicherungsverifikationsmittel 15 auf, das vorzugsweise von der Zentraleinrichtung 3 übermittelt worden ist. Die Verifikationseinrichtung 5E gleicht vorzugsweise das Entsicherungsverifikationsmittel 15 mit dem Entsicherungsidentifikator 37 ab und entsichert das Packstück 2, falls das Entsicherungsverifikationsmittel 15 zu dem Entsicherungsidentifikator 37 korrespondiert oder umgekehrt. Im Darstellungsbeispiel erfolgt die Entsicherung dadurch, dass die Verschlusseinrichtung 48 geöffnet wird, um eine Entnahme des Packstücks 2 zu ermöglichen. Die Entsicherung kann jedoch auch auf andere Weise, bevorzugt gesteuert durch die Verifikationseinrichtung 5E der zugeordneten bzw. ausgewählten Sicherungseinrichtung 4E, erfolgen.

Es ist grundsätzlich bevorzugt, dass das System 1 bzw. die Zentraleinrichtung 3 dazu ausgebildet ist/sind, dass sich das Sicherungsverifikationsmittel 14 stets von dem Entsicherungsverifikationsmittel 15 unterscheidet und/oder das sich der Sicherungsidentifikator 36 stets vom Entsicherungsidentifikator 37 unterscheidet.

Besonders bevorzugt werden der Sicherungsidentifikator 36 und das Sicherungsverifikationsmittel 14 korrespondierend zueinander fallweise neu erzeugt. Vorzugsweise werden der Entsicherungsidentifikator 37 und das Entsicherungsverifikationsmittel 15 fallweise korrespondierend zueinander erzeugt. Es ist jedoch auch möglich, dass der Sicherungsidentifikator 36 vorgegeben ist und lediglich ein korrespondierendes Sicherungsverifikationsmittel 14 erzeugt wird oder umgekehrt. Entsprechendes gilt für die Erzeugung des Entsicherungsidentifikators 37 und/oder des Entsicherungsverifikationsmittels 15. Es ist also auch möglich, dass der Entsicherungsidentifikator 37 vorgegeben ist und lediglich ein korrespondierendes Entsicherungsverifikationsmittel 15 erzeugt wird oder umgekehrt.

In einer weiteren Variante ist vorgesehen, dass der Sicherungsidentifikator 36 und/oder der Entsicherungsidentifikator 37 vorgegeben werden, insbesondere durch die erste Identifikationseinrichtung 33 und/oder die zweite Identifikationseinrichtung 40, wobei der Sicherungsidentifikator 36 und/oder der Entsicherungsidentifikator 37 oder ein hierzu korrespondierender Wert, insbesondere Hashwert, an die Zentraleinrichtung 3 übermittelt wird.

Vorzugsweise wird zu dem Sicherungsidentifikator 36 und/oder dem Entsicherungsidentifikator 37 oder dem hierzu korrespondierenden Wert, insbesondere Hashwert, das korrespondierende Sicherungsverifikationsmittel 14 und/oder Entsicherungsverifikationsmittel 15 erzeugt und/oder an die Sicherungseinrichtung 4E übermittelt.

Vorzugsweise wird zu dem Sicherungsidentifikator 36 und/oder dem Sicherungsverifikationsmittel 14 und/oder Entsicherungsverifikationsmittel 15 oder dem hierzu korrespondierenden Wert, insbesondere Hashwert, das korrespondierende Entsicherungsidentifikator 37 erzeugt und/oder an die zweite Identifikationseinrichtung 40 übermittelt.

Alternativ oder zusätzlich ist die erste Identifikationseinrichtung 33 dazu ausgebildet ist, das Sicherungsverifikationsmittel 14 direkt zu erzeugen und an die zugeordnete bzw. ausgewählte Sicherungseinrichtung 4E bzw. deren Verifikationseinrichtung 5E zu übermitteln, insbesondere direkt und/oder über die Zentraleinrichtung 3.

Alternativ oder zusätzlich die erste Identifikationseinrichtung 33 dazu ausgebildet, das Entsicherungsverifikationsmittel 15 zu erzeugen und an die zugeordnete bzw. ausgewählte Sicherungseinrichtung 4E bzw. deren Verifikationseinrichtung 5E zu übermitteln, insbesondere direkt und/oder über die Zentraleinrichtung 3.

Alternativ oder zusätzlich ist die erste Identifikationseinrichtung 33 dazu ausgebildet, den Entsicherungsidentifikator 37 zu erzeugen und an die zweite Identifikationseinrichtung 40 zu übermitteln, insbesondere direkt oder über die Zentraleinrichtung 3.

Insgesamt ist es also in einem weiteren Aspekt der vorliegenden Erfindung bevorzugt, dass die Zuordnung einer der Sicherungseinrichtungen 4A bis 4K zu einem Packstück 2 oder zu einem zu dem Packstück 2 korrespondierenden Sicherungsidentifikator 36 stets über oder durch die Zentraleinrichtung 3 erfolgt, die zur Sicherung und/oder Entsicherung erforderlichen Mittel jedoch auch getrennt von der Zentraleinrichtung 3 erzeugt und/oder übermittelt werden können.

Besonders bevorzugt erfolgt aufgrund der höheren Sicherheit jedoch die Generierung des Sicherungsverifikationsmittels 14 und/oder des Entsicherungsverifikationsmittels 15 und/oder des Sicherungsidentifikators 36 und/oder des Entsicherungsidentifikators 37 durch die Zentraleinrichtung 3.

Gemäß einem weiteren Aspekt der vorliegenden Erfindung sind die Reservierungseinrichtung 8 und die erste Identifikationseinrichtung 33 durch dasselbe Gerät realisiert. Das Reservierungssignal 9 kann also durch die erste Identifikationseinrichtung 33 erzeugt werden.

Dies ermöglicht eine flexible bedarfsweise Nutzung des Systems 1, da eine Verwendung des vorschlagsgemäßen Systems 1 bei Abwesenheit eines Empfängers für das Packstück 2 auch vor Ort ermöglicht wird. Es können auch mehrere unterschiedliche Reservierungseinrichtungen 8 vorgesehen sein.

Die Reservierungseinrichtung 8 ist und/oder die Reservierungseinrichtungen 8 sind jeweils vorzugsweise Paketdiensten, Handelsunternehmen oder Logistikunternehmen zugeordnet. Die Zentraleinrichtung 3 ist vorzugsweise dazu ausgebildet, von den Reservierungseinrichtungen 8 empfangene Reservierungssingale 9 nach dem first-in first-out Prinzip, sequenziell und/oder nach Prioritäten zu verarbeiten, um Sicherungseinrichtungen 4A bis 4K auszuwählen, insbesondere derart, dass eine Doppelbuchung bzw. eine Auswahl derselben Sicherungseinrichtung 4A bis 4K für unterschiedliche Packstücke 2 verhindert wird.

In einer bevorzugten Option ist die Reservierungseinrichtung 8 mit einem Positionssensor, insbesondere einem GPS-Empfänger, Galileo-Empfänger, einer Ortungseinrichtung auf Basis von Mobilfunkzellen o.dgl., ausgestattet. Die Reservierungseinrichtung 8 kann eine eigene und/oder aktuelle Positionsinformation der Reservierungseinrichtung 8 bestimmen. Dies vereinfacht in vorteilhafter Weise die bedarfsweise auch spontane Nutzung des Systems 1.

Die aktuelle Positionsinformation der Reservierungseinrichtung 8 kann auch gemeinsam mit einer Zustellinformation wie einer Lieferadresse, insbesondere als Ortsanfrageindikator 20 oder Teil hiervon, verwendet bzw. übermittelt werden. Die Zentraleinrichtung 3 kann dann für eine Auswahl der ausgewählten Sicherungseinrichtung 4A bis 4K mehrere Ortsinformationen verwenden. Vorzugsweise werden mehrere Ortsinformationen hierzu gewichtet berücksichtigt.

Die erste Identifikationseinrichtung 33 kann auch eine Empfangseinrichtung zum Empfang des Sicherungsidentifikators 36 sein oder bilden. Alternativ oder zusätzlich kann die zweite Identifikationseinrichtung 40 eine Empfangseinrichtung zum Empfang des Entsicherungsidentifikators 37 sein oder bilden. Es ist daher bevorzugt, dass die Begriffe "erste Identifkatianseinrichtung" und "zweite Identifikationseinrichtung" durch den Begriff "Empfangseinrichtung" ersetzt werden können oder umgekehrt.

Für einen Schließfachbetrieb können die erste Identifikationseinrichtung 33 und die zweite Identifikationseinrichtung 40 durch dasselbe Gerät realisiert sein. Alternativ oder zusätzlich kann das System 1 dazu ausgebildet oder eingerichtet sein, im Bedarfsfall einen Sicherungsidentifikator 36 und/oder einen Entsicherungsidentifikator 37 mehrfach zu akzeptieren, oder sind ein Sicherungsidentifikator 36 und ein Entsicherungsidentifikator 37 identisch. Hierdurch kann eine Sicherung und Entsicherung durch dieselbe Person ermöglicht werden.

Für den regulären Betrieb ist es jedoch bevorzugt, dass sich der Entsicherungsidentifikator 37 von dem Sicherungsidentifikator 36 unterscheidet und/oder dass sich das Entsicherungsverifikationsmittel 15 vom Sicherungsverifikationsmittel 14 unterscheidet und/oder dass das System 1 dazu ausgebildet ist, dass ein Entsicherungsidentifikator 37, ein Sicherungsidentifikator 36, ein Entsicherungsverifikationsmittel 15 und/oder ein Sicherungsverifikationsmittel 14 jeweils lediglich einmalig verwendbar ist/sind bzw. nach einmaliger Verwendung gelöscht, blockiert oder gesperrt wird/werden. Hierdurch ist eindeutig nachvollziehbar, wer zu welchem Zeitpunkt Zugriff auf eine Sicherungseinrichtung 4A bis 5K hat oder genommen hat.

Eine Sicherungseinrichtung 4A bis 4K bzw. ein die Sicherungseinrichtung 4A bis 4K haltbarer Sicherungsbehälter im Sinne der vorliegenden Erfindung ist besonders bevorzugt ein insbesondere kisten-, kasten- oder fachartiger Behälter.

Vorzugsweise weist die Sicherungseinrichtung 4A bis 4K eine Öffnung zum Einlegen und/oder zum Entnehmen des Packstücks 2 auf.

Die Öffnung zum Einlegen und/oder zum Entnehmen des Packstücks 2 hat vorzugsweise eine lichte Weite, die größer als 50 cm, vorzugsweise größer als 60 cm, insbesondere größer als 70 cm, und/oder geringer als 150 cm, vorzugsweise geringer als 100 cm, insbesondere geringer als 80 cm, ist.

Die Öffnung ist vorzugsweise zur Sicherung des Packstücks 2 verschließbar ausgebildet. Besonders bevorzugt ist die Öffnung der Sicherungseinrichtung 4A bis 4K mittels einer Tür oder Klappe oder sonstigen Verschlusseinrichtung 48 verschließbar, die automatisch und/oder elektronisch zur Sicherung oder Entsicherung steuerbar bzw. entriegelbar ist.

Das Packstück 2 ist vorzugsweise mit der Sicherungseinrichtung 4A bis 4K dadurch sicherbar oder entsicherbar, dass die Öffnung freigegeben wird, eine Klappe oder Tür oder eine sonstige Verschlusseinrichtung 48 entsichert wird oder ein Zugriff auf das Packstück 2 oder einen Sicherungsbereich zur Sicherung des Packstücks 2 auf sonstige Weise freigegeben wird.

Insbesondere weist die Sicherungseinrichtung 4A bis 4K ein Fach auf, wobei das Packstück 2 durch Öffnung des Fachs, Einlegen des Packstücks 2 und nachfolgendes Verschließen des Fachs sicherbar oder entsicherbar ist. Hier sind jedoch grundsätzlich auch andere Lösungen möglich.

In einer besonders bevorzugten Ausführungsform weist die Sicherungseinrichtung 4A bis 4K eine Tür oder Klappe auf, die in Öffnungsrichtung derart federbelastet ist, dass die Tür oder Klappe oder sonstige Verschlusseinrichtung 48 bei einer (automatischen) Entriegelung selbsttätig öffnet. Nach Einlegen oder Entnehmen des Packstücks 2 kann die Tür oder Klappe oder sonstige Verschlusseinrichtung 48 dann gegen die Federspannung verschlossen werden, wobei vorzugsweise eine (automatische) Verriegelung erfolgt.

Die Sicherungseinrichtung 4A bis 4K kann ein Volumen durch Wände begrenzen oder auf sonstige Weise unzugänglich machen, vorzugsweise derart, dass das Packstück 2 zur Sicherung in dem Volumen platziert und zur Entsicherung aus dem Volumen wieder entfernt werden kann.

Die Sicherungseinrichtung 4A bis 4K weist vorzugsweise ein Volumen auf, das mehr als 15 l, vorzugsweise mehr als 20 I, insbesondere mehr als 25 l, und/oder weniger als 1000 l, 500 l, 300 l oder 150 l, vorzugsweise weniger als 120 l, insbesondere weniger als 100 l, beträgt.

Einzelne Aspekte und Merkmale der vorschlagsgemäßen Erfindung sowie die beschriebenen Verfahrensschritte und/oder -varianten können unabhängig voneinander, aber auch in beliebiger Kombination miteinander realisiert werden.

### Bezugszeichenliste:

| | | | |
|---|---|---|---|
| 1 | System | 27 | Parameter bzgl. einer Funktionsfähigkeit |
| 2 | Packstück | | |
| 3 | Zentraleinrichtung | 28 | Parameter bzgl. einer Berechtigung |
| 4A bis 4K | Sicherungseinrichtung | | |
| 5A bis 5K | Verifikationseinrichtung | 29 | Zuordnung |
| 6 | Datenverbindung | 30 | Konfigurationsinterface |
| 7 | Netzwerk | 31 | Auswahlmodul |
| 8 | Reservierungseinrichtung | 32 | Datenverbindung |
| 9 | Reservierungssignal | 33 | erste Identifikationseinrichtung |
| 10 | Benutzerschnittstelle | 34 | Zeitbestätigungsindikator |
| 11 | Reservierungsinformation | 35 | Ortsbestätigungsindikator |
| 12 | Buchungssignal | 36 | Sicherungsidentifikator |
| 13 | Sicherungseinrichtungsschnittstelle | 37 | Entsicherungsidentifikator |
| | | 38 | erstes Reservierungsbestätigungssignal |
| 14 | Sicherungsverifikationsmittel | | |
| 15 | Entsicherungsverifikationsmittel | 39 | zweites Reservierungsbestätigungssignal |
| 16 | Zeitreservierungsindikator | | |
| 17 | Packstückparameter | 40 | zweite Identifikationseinrichtung |
| 18 | Berechtigungsidentifikator | 41 | Tastatur |
| 19 | Zeitanfrageindikator | 42 | Scanner |
| 20 | Ortsanfrageindikator | 43 | Funkschnittstelle |
| 21 | Zielort | 44 | Empfänger |
| 22 | Sicherungseinrichtungsparameter | 45 | Netzstromadapter |
| 23 | Sicherungseinrichtungsdatenbank | 46 | Konfigurationsschnittstelle |
| 24 | Datensatz | 47 | Verriegelungsmechanismus |
| 25 | Parameter bzgl. physikalischer Eigenschaften | 48 | Verschlusseinrichtung |
| | | 49 | Sensor |
| 26 | Parameter bzgl. einer Verfügbarkeit | 50 | Lieferwagen |

## Patentansprüche

1. System (1) zur Sicherung von Gegenständen, insbesondere Packstücken (2), gegen unberechtigten Zugriff, vorzugsweise zum Empfang und/oder Versand der Gegenstände bzw. Packstücke (2), mit mehreren Sicherungseinrichtungen (4A - 4K) zur Sicherung eines Gegenstands, insbesondere Packstücks (2), und mit einer Zentraleinrichtung (3), die dazu ausgebildet ist, ein Reservierungssignal (9) zu empfangen und auf Basis des Reservierungssignals (9) eine der Sicherungseinrichtungen (4A - 4K) auszuwählen, im Folgenden ausgewählte Sicherungseinrichtung (4A - 4K) genannt, und ein Buchungssignal (12) und/oder ein Reservierungsbestätigungssignal (38, 39) zu erzeugen, wobei die ausgewählte Sicherungseinrichtung (4A - 4K) durch Verifikation mit dem Buchungssignal (12) und/oder dem Reservierungsbestätigungssignal (38, 39) derart steuerbar ist, dass der Gegenstand bzw. das Packstück (2) mit der ausgewählten Sicherungseinrichtung (4A - 4K) sicherbar oder entsicherbar ist.

2. System (1) nach Anspruch 1, **dadurch gekennzeichnet, dass** das Buchungssignal (12) von der Zentraleinrichtung (3) direkt und/oder über eine Datenverbindung (6) an die ausgewählte Sicherungseinrichtung (4A - 4K) übermittelbar ist; und/oder

3. System (1) nach Anspruch 1 oder 2, **dadurch gekennzeichnet, dass** die Zentraleinrichtung (3) dazu ausgebildet ist, das Reservierungsbestätigungssignal (38, 39) an eine Reservierungseinrichtung (8), die zur Übermittlung des Reservierungssignals (9) an die Zentraleinrichtung (3) ausgebildet ist, an eine der Reservierungseinrichtung (8) zugeordnete und/oder an eine sonstige Identifikationseinrichtung (40) zu übermitteln,
vorzugsweise wobei die Reservierungseinrichtung (8) und/oder die Identifikationseinrichtung (40) von der ausgewählten Sicherungseinrichtung (4A - 4K) unterschiedlich und/oder zur Verifikation mit der ausgewählten Sicherungseinrichtung (4A - 4K) ausgebildet ist.

4. System (1) nach einem der voranstehenden Ansprüche, **dadurch gekennzeichnet, dass** das Reservierungssignal (9) aufweist:
einen Zeitanfrageindikator (19) zur Identifikation einer Zeit, eines Datums, und/oder eines Zeitraums, vorzugsweise zu der/dem der Gegenstand, insbesondere das Packstück (2), mit einer der Sicherungseinrichtungen (4A - 4K) gesichert werden soll, aufweist und die Zentraleinrichtung (3) dazu ausgebildet ist, die durch den Zeitanfrageindikator (19) identifizierte Zeit, das durch den Zeitanfrageindikator (19) identifizierte Datum, und/oder den durch den Zeitanfrageindikator (19) identifizierten Zeitraum mit einer Verfügbarkeit der Sicherungseinrichtungen (4A - 4K) zu vergleichen und in Abhängig von dem Ergebnis des Vergleichs eine oder mehrere Sicherungseinrichtungen (4A - 4K) auszuwählen; und/oder
einen Ortsanfrageindikator (20) zur Identifikation eines Zielorts (21) zur Sicherung des Gegenstands, insbesondere Packstücks (2), aufweist und die Zentraleinrichtung (3) dazu ausgebildet ist, Abstände jeweils zwischen dem Zielort (21) und dem jeweiligen Standort der Sicherungseinrichtungen (4A - 4K) zu bestimmen und eine oder mehrere der Sicherungseinrichtungen (4A - 4K) auf Basis eines Vergleichs der Abstände auszuwählen; und/oder einen Packstückparameter (17) aufweist, der zu physikalischen Eigenschaften des zu sichernden Gegenstands, insbesondere Packstücks (2), korrespondiert, und dass die Zentraleinrichtung (3) dazu ausgebildet ist, die Sicherungseinrichtungen (4A - 4K) auf Eignung zur Sicherung des Gegenstands, insbesondere Packstücks (2) mit den physikalischen Eigenschaften zu überprüfen und in Abhängigkeit von der Eignung eine oder mehrere der Sicherungseinrichtungen (4A - 4K) auszuwählen; und/oder
einen Berechtigungsidentifikator (18) zur Identifikation einer Berechtigung zur Nutzung einer oder mehrerer der Sicherungseinrichtungen (4A - 4K) aufweist und die Zentraleinrichtung (3) dazu ausgebildet ist, eine oder mehrere der durch den Berechtigungsidentifikator (18) identifizierten Sicherungseinrichtungen (4A - 4K) auszuwählen.

5. System (1) nach einem der voranstehenden Ansprüche, **dadurch gekennzeichnet, dass** das Buchungssignal (12) aufweist:
ein Sicherungsverifikationsmittel (14) zur Verifikation eines zur Sicherung des Gegenstands, insbesondere Packstücks (2), berechtigten Nutzers, wobei die jeweilige Sicherungseinrichtung (4A - 4K) dazu ausgebildet ist, eine Sicherung des Gegenstands, insbesondere Packstücks (2), nur nach Verifikation mit dem Sicherungsverifikationsmittel (14) zu ermöglichen; und/oder
ein Entsicherungsverifikationsmittel (15) zur Verifikation eines zur Entsicherung des Gegenstands, insbesondere Packstücks (2), berechtigten Nutzers, wobei die jeweilige Sicherungseinrichtung (4A - 4K) dazu ausgebildet ist, eine Entsicherung des Gegenstands, insbesondere Packstücks (2), nur nach Verifikation mit dem Entsicherungsverifikationsmittel (15) und, vorzugsweise, vorheriger Verifikation mit dem Sicherungsverifikationsmittel (14) zu ermöglichen;
und/oder
einen Zeitreservierungsindikator (16) zur Identifikation eines Zeitraums, in dem der Gegenstand, insbesondere das Packstück (2), mit dem Sicherungssystem (1) gesichert werden soll, wobei die jeweilige Sicherungseinrichtung (4A - 4K) dazu ausgebildet ist, eine Sicherung und/oder Entsicherung des Gegenstands, insbesondere Packstücks (2), nur in dem durch den Zeitreservierungsindikator (16) identifizierten Zeitraum zu ermöglichen.

6. System (1) nach einem der voranstehenden Ansprüche, **dadurch gekennzeichnet, dass** das Reservierungsbestätigungssignal (38, 39) aufweist:
einen Zeitbestätigungsindikator (34) zur Identifikation eines Datums, einer Zeit und/oder eines Zeitraums, zu oder über den der Gegenstand, insbesondere das Packstück (2), mit dem zugeordneten Sicherungssystem (4A - 4K) gesichert werden soll; und/oder
einen Ortsbestätigungsindikator (35) zur Identifikation eines Standorts des zugeordneten Sicherungssystems (4A - 4K) zur Sicherung des Gegenstands, insbesondere Packstücks (2); und/oder
einen Sicherungsidentifikator (36) zur Identifikation eines zur Sicherung des Gegenstands, insbesondere Packstücks (2), berechtigten Nutzers, wobei die jeweilige Sicherungseinrichtung (4A - 4K) dazu ausgebildet ist, eine Sicherung des Gegenstands, insbesondere Packstücks (2), nur nach Verifikation mit dem Sicherungsidentifikator (36) zu ermöglichen; und/oder einen Entsicherungsidentifikator (37) zur Identifikation eines zur Entsicherung des Gegenstands, insbesondere Packstücks (2), berechtigten Nutzers, wobei die jeweilige Sicherungseinrichtung (4A - 4K) dazu ausgebildet ist, eine Entsicherung des Gegenstands, insbesondere Packstücks (2), nur nach Verifikation mit dem Entsicherungsidentifikator (37) zu ermöglichen;
vorzugsweise wobei die Zentraleinrichtung (3) dazu ausgebildet ist, ein erstes Reservierungsbestätigungssignal (38) mit dem Sicherungsidentifikator (36) und ohne den Entsicherungsidentifikator (37) und ein vom ersten unterschiedliches zweites Reservierungsbestätigungssignal (39) mit dem Entsicherungsidentifikator (37) und ohne den Sicherungsidentifikator (36) zu erzeugen und, vorzugsweise, das erste und das zweite Reservierungsbestätigungssignal (38, 39) an unterschiedliche und/oder voneinander unabhängige Identifikationseinrichtungen (33, 40) zu senden.

7. System (1) nach einem der voranstehenden Ansprüche, **dadurch gekennzeichnet, dass** die Zentraleinrichtung (3) eine Sicherungseinrichtungsdatenbank (23) aufweist, in der zu den Sicherungseinrichtungen (4A - 4K) jeweils Sicherungseinrichtungsparameter (22) korrespondierend zu Eigenschaften der jeweiligen Sicherungseinrichtung (4A - 4K) abgelegt sind, insbesondere korrespondierend zu Eigenschaften bezüglich eines Standorts und/oder einer Kapazität und/oder einer Belegung und/oder einer Nutzungsberechtigung und/oder einer Temperlereigenschaft der jeweiligen oder für die jeweilige Sicherungseinrichtung (4A - 4K);

8. System (1) nach einem der voranstehenden Ansprüche, **dadurch gekennzeichnet, dass** die Zentraleinrichtung (3) dazu ausgebildet ist, einen Sicherungseinrichtungsparameter (22) korrespondierend zu einer Eigenschaft einer Sicherungseinrichtung (4A - 4K) zu empfangen und/oder von der/den Sicherungseinrichtung/en (4A - 4K) abzurufen und/oder in einer/der Sicherungseinrichtungsdatenbank (23) abzulegen, vorzugsweise zumindest einen Sicherungseinrichtungsparameter (22) korrespondierend zu einem Sensorsignal eines Sensors zur Ermittlung, ob ein Packstück (2) mit der jeweiligen Sicherungseinrichtung (4A - 4K) gesichert ist, und/oder korrespondierend zu einem Fehlerzustand und/oder Temperiereigenschaft der jeweiligen Sicherungseinrichtung (4A - 4K).

9. System (1) nach einem der voranstehenden Ansprüche, **dadurch gekennzeichnet, dass** die Zentraleinrichtung (3) dazu ausgebildet ist, den Packstückparameter (17) mit dem/den Sicherungseinrichtungsparameter/-n (22), vorzugsweise die durch den Packstückparameter (17) repräsentierten physikalischen Eigenschaften des Gegenstands, insbesondere des Packstücks (2), mit der durch den Sicherungseinrichtungsparameter (22) repräsentierten Kapazität der Sicherungseinrichtung (4A - 4K), zu vergleichen; und/oder
dass die Zentraleinrichtung (3) dazu ausgebildet ist, den Berechtigungsidentifikator (18) mit dem/den Sicherungseinrichtungsparameter/-n (22) zu vergleichen, vorzugsweise die durch den Sicherungseinrichtungsparameter (22) repräsentierte Berechtigung der jeweiligen Sicherungseinrichtung (4A - 4K) zur Nutzung der jeweiligen Sicherungseinrichtung (4A - 4K) mit einer durch den Berechtigungsidentifikator (18) identifizierten Berechtigung zur Nutzung der jeweiligen Sicherungseinrichtung (4A - 4K); und/oder
dass die Zentraleinrichtung (3) dazu ausgebildet ist, den Zeitanfrageindikator (19) mit dem Sicherungseinrichtungsparameter (22) zu vergleichen, vorzugsweise die durch den Sicherungseinrichtungsparameter (22) repräsentierte Verfügbarkeit der jeweiligen Sicherungseinrichtung (4A - 4K) mit der/dem durch den Zeitanfrageindikator (19) identifizierten Zeit, Datum, und/oder Zeitraum zu vergleichen; und/oder
dass die Zentraleinrichtung (3) dazu ausgebildet ist, den Ortsanfrageindikator (20) mit dem Sicherungseinrichtungsparameter (22) zu vergleichen, vorzugsweise wobei eine Entfernung zwischen dem durch den Ortsanfrageindikator (20) identifizierten Zielort (21) und dem jeweiligen Standort der Sicherungseinrichtungen (4A - 4K) bestimmt wird.

10. System (1) nach Anspruch 9, **dadurch gekennzeichnet, dass** die Zentraleinrichtung (3) dazu ausgebildet ist, diejenige Sicherungseinrichtung (4A - 4K) auszuwählen, die
gemäß dem Ergebnis des Vergleichs des Packstückparameters (18) mit dem Sicherungseinrichtungsparameter (22) physikalisch zur Sicherung geeignet ist, und/oder
gemäß dem Ergebnis des Vergleichs des Berechtigungsidentifikators (18) mit dem Sicherungseinrichtungsparameter (22) eine Berechtigung zur Sicherung berechtigt ist, und/oder
gemäß dem Ergebnis des Vergleichs des Zeitanfrageindikators (19) mit den Sicherungseinrichtungsparameter (22) verfügbar ist, und/oder
gemäß dem Ergebnis des Vergleichs des Ortsanfrageindikator (20) mit dem Sicherungseinrichtungsparameter (22) den geringsten Abstand von dem Zielort aufweist.

11. Verfahren zur Sicherung von Gegenständen, insbesondere Packstücken (2), gegen unberechtigten Zugriff, vorzugsweise zum Empfang und/oder Versand der Packstücke (2), mit mehreren Sicherungseinrichtungen (4A - 4K) zur Sicherung eines Gegenstands, insbesondere Packstücks (2), und mit einer Zentraleinrichtung (3), die dazu ausgebildet ist, ein Reservierungssignal (9) zu empfangen, wobei auf Basis des Reservierungssignals (9) eine der Sicherungseinrichtungen (4A - 4K) ausgewählt wird, im Folgenden ausgewählte Sicherungseinrichtung (4A - 4K) genannt, und durch die Zentraleinrichtung (3) ein Buchungssignal (12) und/oder ein Reservierungsbestätigungssignal (38, 39) erzeugt wird/werden, wobei die ausgewählte Sicherungseinrichtung (4A - 4K) durch Verifikation mit dem Buchungssignal (12) und/oder dem Reservierungsbestätigungssignal (38, 39) der Gegenstand, insbesondere das Packstück (2), mit der ausgewählten Sicherungseinrichtung (4A - 4K) sichert oder entsichert.

12. Zentraleinrichtung (3) für ein System (1) zur Sicherung von Gegenständen, insbesondere Packstücken (2), gegen unberechtigten Zugriff, vorzugsweise zum Empfang und/oder Versand der Gegenstände, insbesondere Packstücke (2), gemäß einem der Ansprüche 1 bis 8, **dadurch gekennzeichnet, dass** die Zentraleinrichtung (3) eine Benutzerschnittstelle (10) mit Datenverbindungen (6) zu mehreren Sicherungseinrichtungen (4A - 4K) zur Sicherung eines Gegenstands, insbesondere Packstücks (2), aufweist, wobei die Zentraleinrichtung (3) dazu ausgebildet ist, ein Reservierungssignal (9) zu empfangen und auf Basis des Reservierungssignals (9) eine der Sicherungseinrichtungen (4A - 4K) auszuwählen, im Folgenden ausgewählte Sicherungseinrichtung (4A - 4K) genannt, und wobei die Zentraleinrichtung (3) dazu ausgebildet ist, ein Buchungssignal (12) und/oder ein Reservierungsbestätigungssignal (38, 39) zu erzeugen, wobei das Buchungssignal (12) und/oder Reservierungsbestätigungssignal (38, 39) dazu ausgebildet ist, dass der Gegenstand, insbesondere das Packstück (2), bei Verifikation mit dem Buchungssignal (12) und/oder dem Reservierungssignal (9) mit der ausgewählten Sicherungseinrichtung (4A - 4K) sicherbar oder entsicherbar ist.

13. Verwendung einer Verifikation mit einem Buchungssignal (12) und/oder Reservierungsbestätigungssignal (38, 39), wobei das Buchungssignal (12) und/oder Reservierungsbestätigungssignal (38, 39) zu einer bestimmten oder ausgewählten von mehreren Sicherungseinrichtungen (4A - 4K) korrespondiert, zur Sicherung oder Entsicherung eines Gegenstands mit der bestimmten der Sicherungseinrichtungen (4A - 4K).

14. Verwendung nach Anspruch 13, **dadurch gekennzeichnet, dass** das Buchungssignal (12) und/oder Reservierungsbestätigungssignal (38, 39) beschränkt auf eine bestimmte Zeitspanne die Sicherung oder Entsicherung eines Gegenstands ermöglicht.

15. Verwendung nach Anspruch 13 oder 14, **dadurch gekennzeichnet, dass** das Buchungssignal (12) an die bestimmte der Sicherungseinrichtungen (4A - 4K) übermittelt wird, das Reservierungsbestätigungssignal (38, 39) an eine von der bestimmten der Sicherungseinrichtungen (4A - 4K) unterschiedliche Identifikationseinrichtung (33, 40) übermittelt wird und das Buchungssignal (12) gemeinsam mit dem Reservierungsbestätigungssignal (38, 39) zur Verifikation verwendet werden, wodurch die Sicherung oder Entnahme des Gegenstands bewirkbar ist.
